# EUROPEAN PATENT SPECIFICATION

(11) **EP 4 483 302 B1**
(45) Date of publication and mention of the grant of the patent: **02.12.2026**
(21) Application number: 22712304.9
(22) Date of filing: 23.02.2022
(51) Int. Cl.: G06N 10/20, G06N 10/60, G06N 5/01, G06N 10/40

(54) **METHOD OF PERFORMING A QUANTUM COMPUTATION, APPARATUS FOR PERFORMING A QUANTUM COMPUTATION**
VERFAHREN ZUR DURCHFÜHRUNG EINER QUANTENBERECHNUNG, VORRICHTUNG ZUR DURCHFÜHRUNG EINER QUANTENBERECHNUNG
PROCÉDÉ DE RÉALISATION D'UN CALCUL QUANTIQUE ET APPAREIL DE RÉALISATION D'UN CALCUL QUANTIQUE

(43) Date of publication of application: 01.01.2025
(73) Proprietor: Parity Quantum Computing GmbH, 6020 Innsbruck (AT)
(72) Inventor: ENDER, Kilian, 6020 Innsbruck (AT); MESSINGER, Anette, 6175 Kematen in Tirol (AT); FELLNER, Michael, 6300 Wörgl (AT); LECHNER, Wolfgang, 6063 Rum (AT)
(74) Representative: Zimmermann & Partner Patentanwälte mbB
(86) International application number: PCT/EP2022/054557
(87) International publication number: WO 2023/160781

(56) References cited:
- EP-A1- 3 113 084
- WO-A1-2020/156680
- MAIKE DRIEB-SCH\"ON ET AL: "Parity Quantum Optimization: Encoding Constraints", ARXIV.ORG, CORNELL UNIVERSITY LIBRARY, 201 OLIN LIBRARY CORNELL UNIVERSITY ITHACA, NY 14853, 13 May 2021 (2021-05-13), XP081962930
- LECHNER WOLFGANG: "Quantum Approximate Optimization With Parallelizable Gates", IEEE TRANSACTIONS ON QUANTUM ENGINEERING, IEEE, vol. 1, 29 October 2020 (2020-10-29), pages 1 - 6, XP011821022, DOI: 10.1109/TQE.2020.3034798

## Description

### FIELD

Embodiments described herein relate to a method and an apparatus for performing a quantum computation. The method uses a quantum system including constituents, such as qubits. The constituents of the quantum system are acted upon by, for example, a quantum processing system, to process the information carried by the constituents. Some of the constituents are measured to reveal the information contained in the constituents. Based on the read-out obtained from the measurement, a computational problem is solved.

### BACKGROUND

Quantum computing devices are computing devices which make use of quantum mechanical effects to solve computational problems. In a quantum computing device, or quantum computer, information is carried by quantum systems, such as e.g. quantum bits ("qubits"). This is in contrast to conventional computers, which operate with classical bits, i.e. 0 and 1. During a quantum computation, quantum bits can be processed by evolving the quantum system. For example, groups of qubits of the quantum system can be coupled to each other according to a specified interaction. By evolving the quantum system, the information carried by the quantum system can be processed in order to carry out a computation, i.e. in order to solve a computational problem. In many cases, a quantum computer can be assisted by a classical computer, i.e. a computer operating with classical bits. The classical computer can provide instructions to the quantum computer as to how the qubits in the system are to be processed by the quantum computer.

In many approaches to quantum computation, in order to carry out an arbitrary quantum computation it is necessary to perform long-range interactions. Long-range interactions are interactions that couple qubits which are far apart from each other in the quantum system. Such long-range interactions provide an obstacle, since their practical realization is difficult. In some set-ups, long-range interactions can be replaced by sequences of short-range interactions. Yet, these approaches have the disadvantage that the sequences of short-range interactions are inherently sequential, i.e. they cannot be parallelized, leading to an increased runtime of the quantum computation. In turn, the fact that such sequences cannot be parallelized can compromise the scalability of the quantum computers based on such principles.

Alternatively, some approaches to quantum computing use short-range interactions only, but have the disadvantage that they are not fully programmable. That is, such quantum computers are restricted in the sense that they are tailored to solve certain specific computational problems, but they are not capable of solving arbitrary computational problems.

In yet other approaches, the quantum computation can be parallelized to a certain degree, but this comes at the cost of reducing the efficiency of the quantum computation, i.e. the runtime needed by the quantum computer for solving the computational problem at hand is increased in such approaches.

WO 2020/156680 A1 describes a method of performing a quantum computation. The method includes providing a quantum system comprising a plurality of qubits. The method includes encoding a computational problem into a problem Hamiltonian of the quantum system. The problem Hamiltonian is a single-body Hamiltonian comprising a plurality of adjustable parameters. The encoding includes determining, from the computational problem, a problem-encoding configuration for the plurality of adjustable parameters. The method includes performing N rounds of operations, wherein N ≥ 2. Each round of the N rounds of operations includes determining a sequence of unitary operators, wherein each unitary operator in the sequence is a unitary operator being a unitary time evolution of the problem Hamiltonian, wherein the plurality of adjustable parameters of the problem Hamiltonian are in the problem-encoding configuration, or a unitary operator being a product of two or more short-range unitary operators. Each round of the N rounds of operations includes evolving the quantum system by applying the sequence of unitary operators to the quantum system. Each round of the N rounds of operations includes performing a measurement of one or more qubits of the quantum system. The method includes outputting a result of the quantum computation.

Therefore, there is a need for improved methods and devices for performing a quantum computation.

### SUMMARY

According to an embodiment, a method of performing a quantum computation is provided. The method includes providing a quantum system comprising constituents. The method includes encoding a computational problem into a problem Hamiltonian of the quantum system. The problem Hamiltonian is a single-body Hamiltonian being a sum of summand problem Hamiltonians. The method includes determining a constraint Hamiltonian of the quantum system. The constraint Hamiltonian is a sum of summand constraint Hamiltonians. A ground state of a total Hamiltonian encodes a solution to the computational problem. The total Hamiltonian includes a sum of the problem Hamiltonian and the constraint Hamiltonian. The method includes determining a first subset of the summand constraint Hamiltonians of the constraint Hamiltonian and a second subset of the summand constraint Hamiltonians of the constraint Hamiltonian. The method includes performing N rounds of operations, wherein N ≥ 2. Each round includes preparing an initial quantum state. Each round includes evolving the quantum system according to a sequence of unitary operators. The sequence includes problem-encoding unitary operators, constraint-enforcing unitary operators and unitary driver operators. Each problem-encoding unitary operator is a unitary time evolution operator of a summand problem Hamiltonian of the problem Hamiltonian or is a unitary time evolution operator of a sum of summand problem Hamiltonians of the problem Hamiltonian. Each constraint-enforcing unitary operator is a unitary time evolution operator of a summand constraint Hamiltonian taken from the first subset of the summand constraint Hamiltonians of the constraint Hamiltonian, or is a unitary time evolution operator of a sum of summand constraint Hamiltonians taken from said first subset. Each unitary driver operator is a unitary operator that commutes with every summand constraint Hamiltonian from the second subset of the summand constraint Hamiltonians of the constraint Hamiltonian. Each round includes performing a measurement of one or more constituents of the quantum system. The method includes outputting a result of the quantum computation.

According to a further embodiment, an apparatus for performing a quantum computation is provided. The apparatus includes a quantum system comprising constituents. The apparatus includes a classical computing system. The classical computing system is configured to encode a computational problem into a problem Hamiltonian of the quantum system. The problem Hamiltonian is a single-body Hamiltonian being a sum of summand problem Hamiltonians. The classical computing system is configured to determine a constraint Hamiltonian of the quantum system, the constraint Hamiltonian being a sum of summand constraint Hamiltonians. A ground state of a total Hamiltonian encodes a solution to the computational problem, wherein the total Hamiltonian includes a sum of the problem Hamiltonian and the constraint Hamiltonian. The classical computing system is configured to determine a first subset of the summand constraint Hamiltonians of the constraint Hamiltonian and a second subset of the summand constraint Hamiltonians of the constraint Hamiltonian. The apparatus includes a quantum processing system including a unitary evolution device and a measurement device. The quantum processing system is configured to perform N rounds of operations, wherein N ≥ 2. Each round includes evolving, by the unitary evolution device, the quantum system according to a sequence of unitary operators. The sequence includes problem-encoding unitary operators, constraint-enforcing unitary operators and unitary driver operators. Each problem-encoding unitary operator is a unitary time evolution operator of a summand problem Hamiltonian of the problem Hamiltonian or is a unitary time evolution operator of a sum of summand problem Hamiltonians of the problem Hamiltonian. Each constraint-enforcing unitary operator is a unitary time evolution operator of a summand constraint Hamiltonian taken from the first subset of the summand constraint Hamiltonians of the constraint Hamiltonian, or is a unitary time evolution operator of a sum of summand constraint Hamiltonians taken from said first subset. Each unitary driver operator is a unitary operator that commutes with every summand constraint Hamiltonian from the second subset of the summand constraint Hamiltonians of the constraint Hamiltonian. Each round includes performing, by the measurement device, a measurement of one or more constituents of the quantum system. The classical computing system is further configured to output a result of the quantum computation.

Embodiments are also directed to methods for operating the systems described herein, and to the use of the systems to perform the methods according to the embodiments described herein.

Further advantages, features, aspects and details that can be combined with embodiments described herein are evident from the dependent claims, the description and the drawings.

### BRIEF DESCRIPTION OF THE DRAWINGS

A full and enabling disclosure to one of ordinary skill in the art is set forth more particularly in the remainder of the specification including reference to the accompanying drawings wherein:
FIG. 1 illustrates an encoding of a computational problem into a problem Hamiltonian;
FIG. 2 shows a constraint Hamiltonian being a sum of summand constraint Hamiltonians, wherein the summand constraint Hamiltonians are grouped into a first set of summand constraint Hamiltonians and a second set of summand constraint Hamiltonians;
FIG. 3 illustrates a spatial arrangement of a first set of summand constraint Hamiltonians acting on quantum system including constituents;
FIG. 4 illustrates a partitioning of the quantum system into subsystems based on the spatial arrangement of the first set of summand constraint Hamiltonians;
FIG. 5 shows an apparatus for performing a quantum computation according to embodiments described herein;
Figs. 6a)-c) show an example of a modularization of a parity-compiled computational problem;
Figs. 7a)-c) show an example of a parity-encoded complete graph;
Figs. 8a)-b) show examples of arrangements of summand constraint Hamiltonians with partitioning into three- and four-body constraints;
Fig. 9 shows an example of an optimized set of explicitly enforced constraint terms such that hybrid driver lines which preserve the remaining constraint terms can be implemented with a parallelizable quantum circuit of small depth;
Fig. 10 illustrates a modularization of a layout of qubits with additional explicitly enforced constraints arranged in a grid;
Fig. 11 shows the quantum circuit depth to implement a single step of the QAOA protocol for a layout as shown in Fig. 7;
Fig. 12 illustrates the mean residual energy after optimization versus the relative amount of explicitly enforced constraint terms for different system sizes;
Fig. 13 shows a possible decomposition of the unitary operator *e^{-iβ}^{X̂}*^{(*µ*)} corresponding to the time evolution under a driver term into CNOT gates and *Rₓ*-rotation gates; and
Fig. 14 shows an example of two sets of connected driver lines in a sub-module with assigned priorities.

### DETAILED DESCRIPTION

Reference will now be made in detail to the various exemplary embodiments, one or more examples of which are illustrated in each figure. Each example is provided by way of explanation and is not meant as a limitation. For example, features illustrated or described as part of one embodiment can be used on or in conjunction with other embodiments to yield yet further embodiments. It is intended that the present disclosure includes such modifications and variations.

Within the description of the drawings, the same reference numbers refer to the same or similar components. Generally, only the differences with respect to the individual embodiments are described. The structures shown in the drawings are not necessarily depicted true to scale, and may contain details drawn in an exaggerated way to allow for a better understanding of the embodiments.

Embodiments described herein relate to methods and apparatuses for performing gate-based quantum computing. Gate-based quantum computing, or digital quantum computing, can be understood as a method of computation wherein the quantum computation is driven by sequences of unitary operators. Gate-based quantum computing is distinguished from other approaches, such as e.g. adiabatic quantum computation (quantum annealing) or measurement-based quantum computation.

A quantum system as described herein is a physical system exhibiting quantum effects. That means, the quantum system is a real-world object. The quantum system includes constituents. The constituents are physical quantum entities themselves, and can be regarded as smaller d-level quantum systems that jointly form the quantum system. Specifically, the constituents of the quantum system can be qubits. A qubit shall be understood as a physical entity that realizes a two-level quantum system. The constituents may be d-level quantum systems ("qudits") with d > 2, wherein only two levels of the d levels might be used.

The quantum system can be in different quantum states, such as an initial quantum state (in which it may be prepared at the beginning of a quantum computation) and a final quantum (in which it may end up due to the quantum computation). The final quantum state can be, or can approximate, a ground state of a Hamiltonian of the quantum system, such as the total quantum Hamiltonian as described herein. The quantum system can be evolved from an initial quantum state towards, or to, a ground state of the total quantum Hamiltonian by performing sequences of unitary operators. Such an evolution is a real-world process, and particularly a controlled technical process (quantum computation) which brings the quantum system from an initial quantum state to an *a priori* unknown final quantum state that contains information about the solution to a computational problem. This information can be revealed by measuring the quantum system or a part thereof, i.e., at least some of its constituents. The act of measuring is also a physical/technical process. Measurements allow to obtain a read-out of the quantum system. A read-out of a quantum system is a set of measurement values obtained by measurements of constituents of the quantum system, involving physical interactions with the constituents.

The quantum system may include K constituents, which may be qubits, wherein K may be at least 100, at least 1.000 or at least 10.000. K may be from 100 to 10.000, or from 100 to 100.000, but K may be larger than 100.000. It shall be understood that the quantum systems shown in the figures and described in examples may be much smaller for illustrative and explanatory purposes, but shall not be understood to provide any limitation.

If *Ĥ* is a Hamiltonian of the quantum system, the operator exp(it*Ĥ*) is a unitary operator. Therein, t is a time parameter. A unitary operator of the form exp(it*Ĥ*) shall be referred to herein as a unitary time evolution operator, or unitary time evolution for short, according to the Hamiltonian *Ĥ*. A quantum system may be evolved by a unitary time evolution of a Hamiltonian. The act of performing a unitary operator is a physical/technical process. Evolving the quantum system by a unitary time evolution exp(it*Ĥ*) may include switching on an interaction between subsets of the constituents of the quantum system, wherein the interaction is defined by the Hamiltonian *Ĥ*. The interaction may be switched on for a time period t. The interaction may be switched off after the time period t has elapsed.

In any realistic system, at least a small amount of noise is always present. Accordingly, quantum states cannot be realized with 100% accuracy. Likewise, operations performed on a quantum system, such as unitary operators and measurements, are always subject to at least some noise, and are not realized with 100% accuracy. It shall be understood that the quantum states and operations described herein encompass states and operations that are subject to small amounts of noise.

According to an embodiment, a method of performing a quantum computation is provided. The method includes providing a quantum system comprising constituents. The method includes encoding a computational problem into a problem Hamiltonian of the quantum system. The problem Hamiltonian is a single-body Hamiltonian being a sum of summand problem Hamiltonians. The method includes determining a constraint Hamiltonian of the quantum system. The constraint Hamiltonian is a sum of summand constraint Hamiltonians. A ground state of a total Hamiltonian encodes a solution to the computational problem. The total Hamiltonian includes, or is, a sum of the problem Hamiltonian and the constraint Hamiltonian. The method includes determining a first subset of the summand constraint Hamiltonians of the constraint Hamiltonian and a second subset of the summand constraint Hamiltonians of the constraint Hamiltonian. The method includes performing N rounds of operations, wherein N ≥ 2. Each round includes preparing an initial quantum state. Each round includes evolving the quantum system according to a sequence of unitary operators. The sequence includes, or consists of, problem-encoding unitary operators, constraint-enforcing unitary operators and unitary driver operators. Each problem-encoding unitary operator is a unitary time evolution operator of a summand problem Hamiltonian of the problem Hamiltonian or is a unitary time evolution operator of a sum of summand problem Hamiltonians of the problem Hamiltonian. Each constraint-enforcing unitary operator is a unitary time evolution operator of a summand constraint Hamiltonian taken from the first subset of the summand constraint Hamiltonians of the constraint Hamiltonian, or is a unitary time evolution operator of a sum of summand constraint Hamiltonians taken from said first subset. Each unitary driver operator is a unitary operator that commutes with every summand constraint Hamiltonian from the second subset of the summand constraint Hamiltonians of the constraint Hamiltonian. Each round includes performing a measurement of one or more constituents of the quantum system. The method includes outputting a result of the quantum computation.

According to embodiments described herein, an (a priori unknown) solution of the computational problem is encoded in the ground space of the total Hamiltonian. To determine said solution, the quantum system is evolved towards a ground state of the total Hamiltonian by unitary evolution, more specifically by applying sequences of unitary operators during the N rounds of operations. The N rounds of operations provide an iterative process in which the quantum system is moved gradually closer to a ground state of the total Hamiltonian. A final measurement of the quantum system state at the end of the iterative process can then reveal the solution of the computational problem.

The total Hamiltonian may be a sum of two parts, namely a sum of the problem Hamiltonian and the constraint Hamiltonian. A ground state of the total Hamiltonian is thus characterized as a quantum state having a low energy with respect to both the problem Hamiltonian and the constraint Hamiltonian. Accordingly, the quantum system can be evolved towards a ground state of the total Hamiltonian by lowering the energy of the quantum system with respect to both the problem Hamiltonian and the constraint Hamiltonian. By applying the problem-encoding unitary operators in the sequences of unitary operators of the N rounds - the problem-encoding unitary operators being time evolutions of (sums of) summand problem Hamiltonians - the quantum system is evolved to a region of states that have a low energy with respect to the problem Hamiltonian. As regards the constraint Hamiltonian, the summand constraint Hamiltonians are split up into two groups, namely the first subset (denoted by S₁) and the second subset (denoted by S₂) of the summand constraint Hamiltonians. The summand constraint Hamiltonians from the first subset S₁ are treated similarly to the summand problem Hamiltonians. Namely, by performing unitary time evolutions of (sums of) summand constraint Hamiltonians from the first subset S₁ - these time evolution operators are the constraint-enforcing unitary operators - the quantum system evolves to quantum states having a low energy with respect to each of the constraint Hamiltonians from the first subset S₁. The summand constraint Hamiltonians of the first subset S₁ are said to be enforced "explicitly". In contrast, the summand constraint Hamiltonians from the second subset S₂ are not enforced explicitly. Rather, a set of unitary operators is chosen - the unitary driver operators - which are such that the energy of the quantum system with respect to the summand constraint Hamiltonians of the second subset S₂ is conserved when evolving the quantum system according to the unitary driver operators (that is to say, the unitary driver operators commute with every summand constraint Hamiltonian from the second subset S₂). Accordingly, if the quantum system starts out in a ground state of the summand constraint Hamiltonians of the second subset S₂, the quantum system will remain within the ground space of said summand constraint Hamiltonians throughout the evolution of the quantum system, and so there is no need to enforce the summand constraint Hamiltonians of the second subset S₂ explicitly. The summand constraint Hamiltonians of the second subset S₂ are said to be enforced "implicitly".

The present disclosure thereby provides a "hybrid" approach where some summand constraint Hamiltonians are enforced explicitly while others are enforced implicitly. The explicit enforcement of the summand constraint Hamiltonians of the first subset S₁ has the advantage that the corresponding constraint-enforcing unitary operators are highly parallelizable, i.e. these unitary operators can be implemented with small circuit depth, which greatly facilitates their practical realization. Still, not all of the summand constraint Hamiltonians of the constraint Hamiltonian are enforced explicitly, since the explicit enforcement leads to an increase in the size of the subspace of quantum states that is to be searched during the course of the iterative process described above, hence resulting in an increase in the runtime of the computation. In contrast, by its very construction, the implicit enforcement of the second subset S₂ of summand constraint Hamiltonians forces the quantum system to stay within the ground space of the summand constraint Hamiltonians of the second subset S₂, and thereby restricts the size of the subregion of the quantum system that is probed during the quantum computation. Embodiments described herein thus provide a combination of two benefits, namely a high degree of parallelizability (due to the explicit enforcement of the summand constraint Hamiltonians from the first subset S₁) combined with a smaller search space and hence an improved runtime of the computation (due to the implicit enforcement of the summand constraint Hamiltonians from the second subset S₂).

### Computational problem

The computational problem may be a decision problem, an optimization problem, or a different kind of computational problem. The computational problem may be any one of a variety of computational problems considered in, e.g., the fields of computer science, physics, chemistry or engineering. The computational problem may be an NP-hard problem, for example an Ising spin model problem. The computational problem of the present disclosure can be any computational problem as described in EP 3 113 084 B1.

The size of a computational problem may be understood as a measure for the number of classical information units, e.g. the number of classical bits, required to specify the computational problem. The size of a computational problem may depend on, or be, the number of input variables of the computational problem. The size of a computational problem may increase as the number of input variables increases.

### Problem Hamiltonian

The problem Hamiltonian, denoted by *Ĥ*_{P}, is a single-body Hamiltonian of the quantum system. A single-body Hamiltonian is a Hamiltonian wherein no interactions occur between groups of two or more constituents. A single-body Hamiltonian may represent interactions between the constituents of the quantum system and an external entity, e.g. a magnetic field or an electric field, wherein each constituent interacts individually with the external entity.

The problem Hamiltonian is a sum of summand problem Hamiltonians. Each summand problem Hamiltonian may act on a single constituent of the quantum system. The problem Hamiltonian may have the form *Ĥ*_{P} *=* Σ*ₖ Ĥ*_{P,k} wherein each *Ĥ*_{P,k} is a summand problem Hamiltonian acting solely on the k-th constituent of the quantum system.

The problem Hamiltonian may have adjustable parameters. An adjustable parameter of the problem Hamiltonian can be a parameter representing a strength and/or a direction of an interaction between a constituent of the quantum system and an external entity. The external entity may be a field, particularly a single-body field. A single-body field may refer to a field influencing a single constituent of the quantum system. The external entity may, e.g., include: one or more magnetic fields; one or more electric fields; one or more laser fields; one or more microwaves; and one or more phase shifts from mechanical deformations; or any combination thereof. The adjustable parameters of the problem Hamiltonian may include a plurality of field strengths and/or a plurality of field directions of single-body fields acting on the constituents of the quantum system.

The problem Hamiltonian may have the form ${\hat{H}}_{P} = {\sum }_{k} {J}_{k} {\hat{σ}}_{z}^{\left(k\right)}$, wherein ${\hat{σ}}_{z}^{\left(k\right)}$ is a Pauli operator of a k-th constituent of the quantum system, and wherein each Jₖ is a coefficient. The coefficients Jₖ may form the adjustable parameters of the problem Hamiltonian. Each term ${J}_{k} {\hat{σ}}_{z}^{\left(k\right)}$ may be a summand problem Hamiltonian as described herein.

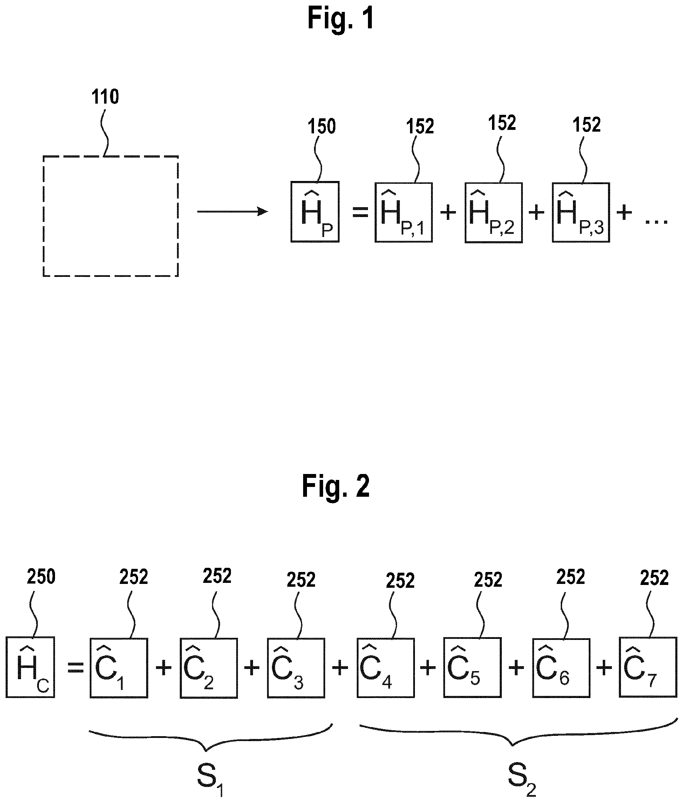

Fig. 1 illustrates a computational problem 110 that is encoded into a problem Hamiltonian *Ĥ*_{P} = Σ*ₖ Ĥ*_{P,k}. The problem Hamiltonian *Ĥ*_{P} and each summand problem Hamiltonian *Ĥ*_{P,k} are indicated in Fig. 1 by reference numerals 150 and 152, respectively.

Encoding the computational problem into the problem Hamiltonian may include determining, from the computational problem, a problem-encoding configuration of the adjustable parameters of the problem Hamiltonian. The problem-encoding configuration may contain information about the computational problem. In particular, there may be a one-to-one correspondence between the computational problem and the problem-encoding configuration. For example, for a problem Hamiltonian of the form ${\hat{H}}_{P} = {\sum }_{k} {J}_{k} {\hat{σ}}_{z}^{\left(k\right)}$*,* the coefficients Jₖ may form the adjustable parameters, and the problem-encoding configuration may be a specific set of values of the parameters Jₖ that encodes the computational problem that is to be solved by the quantum computation.

Encoding the computational problem into the problem Hamiltonian may include a two-step process wherein the computational problem is first mapped to an auxiliary computational problem and the auxiliary computational problem is thereafter mapped to the problem Hamiltonian.

Encoding the computational problem into the problem Hamiltonian may include mapping the computational problem onto an auxiliary computational problem, wherein the auxiliary computational problem includes determining a ground state of a spin model, such as an Ising spin model. The auxiliary computational problem may be an Ising spin model problem. The auxiliary computational problem may be an NP-hard computational problem, such as the Ising spin model problem. Mappings from a variety of computational problems to the Ising spin model problem, or other NP-hard problems, are known in the literature.

Encoding the computational problem into the problem Hamiltonian may include determining the problem Hamiltonian from the auxiliary computational problem. Specifically, a problem-encoding configuration of the adjustable parameters of the problem Hamiltonian may be determined from the auxiliary computational problem. For example, each interaction between spins in the spin model of the auxiliary computational problem may be mapped to a summand problem Hamiltonian of the problem Hamiltonian. Specific encodings (called "parity" encodings) that allow to determine the problem Hamiltonian from the Ising spin model problem are described in EP 3 113 084 B1 and WO 2022/008057 A1.

### Constraint Hamiltonian

The act of determining the constraint Hamiltonian can include determining a classical description of the constraint Hamiltonian. Determining can include calculating (e.g. by a classical computing system), reading (e.g. from a memory), receiving (e.g. via a communication channel), and the like. The act of determining the first subset and the second subset of the summand constraint Hamiltonians can be understood similarly.

The constraint Hamiltonian (denoted by *Ĥ*_{C}) may be a short-range Hamiltonian. A short-range Hamiltonian may refer to a Hamiltonian representing joint interactions within groups of constituents, wherein no interactions occur between constituents which are distanced from each other by a distance greater than an interaction cut-off distance D_{SR}. The interaction cut-off distance D_{SR} may be a constant distance. The interaction cut-off distance D_{SR} may be much smaller than a maximal constituent distance between the constituents in the quantum system. For example, the interaction cut-off distance may be 30% or less, 20% or less, or 10% or less of the maximal constituent distance. If the constituents are arranged in a lattice having an elementary distance (lattice constant), a short-range quantum Hamiltonian may be such that no interactions occur between constituents distanced from each other by a distance greater than *r* times the elementary distance (lattice constant) of the lattice. Therein, *r* may be from 1 to 5, e.g. $r = \sqrt{2}$, 2, 3, 4 or 5. A short-range Hamiltonian *Ĥ* may have the form *Ĥ* = *Σᵢ Ĥ*ᵢ, wherein each *Ĥ*ᵢ is a summand Hamiltonian of *Ĥ*, and wherein each summand Hamiltonian *Ĥ*ᵢ acts only within a group of constituents of the quantum system such that any two constituents in the group are distanced from each other by a distance not greater than the interaction cut-off distance D_{SR}. Each summand Hamiltonian *Ĥ*ᵢ may have the form *Ĥ*ᵢ *= K̂*ᵢ ⊗ I, wherein ⊗ is the tensor product, *K̂*ᵢ is an operator acting within the group of constituents, and I is the identity operator acting on all constituents outside of said group of constituents.

The constraint Hamiltonian may be a d-body Hamiltonian, wherein d is 8 or less, particularly 4 or less. A d-body Hamiltonian may refer to a Hamiltonian representing interactions of the plurality of constituents, wherein no joint interactions occur between groups comprising d+1 or more constituents. A d-body Hamiltonian may be a sum of summand Hamiltonians, wherein each summand Hamiltonian represents a joint interaction between a group of d constituents or less.

A Z-type operator is an operator of the form Σ*ⱼ aⱼ Ẑ*ⱼ (including the case where the sum includes only one term), wherein each aⱼ is a coefficient and each *Ẑ*ⱼ is a tensor product of Pauli σ̂_{z} operators or a single Pauli σ̂_{z} operator. The constraint Hamiltonian may be a Z-type operator. The constraint Hamiltonian may have the form *Ĥ*_{C} *=* ∑*ₗ Ĉₗ*, wherein each *Ĉₗ* has the form *Ĉₗ* = *aₗ Ẑₗ + bₗI*, wherein *Ẑₗ* is a tensor product of Pauli σ̂_{z} operators, I is the identity operator, and aₗ and bₗ are coefficients. Each *Ĉₗ* may be a summand constraint Hamiltonian.

Herein, specific forms of the Hamiltonians (problem Hamiltonian, constraint Hamiltonian, driver Hamiltonian, and the like) are provided by way of example. For example, as described above, the problem Hamiltonian and the constraint Hamiltonian can employ Pauli *σ̂_{z}* operators. It shall be understood that this choice of types of Pauli operators is without loss of generality in that corresponding orientations (x, y, z) can be chosen freely, or else the types of Pauli operators can be permuted. The problem Hamiltonian and the constraint Hamiltonians may employ a same type of Pauli operators.

The constraint Hamiltonian *Ĥ*_{C} has the property that the ground state of the total Hamiltonian (denoted by *Ĥ*ₜₒₜₐₗ) encodes a solution to the computational problem, wherein the total Hamiltonian is a sum of the problem Hamiltonian *Ĥ_{P}* and the constraint Hamiltonian *Ĥ*_{C}, i.e. *Ĥ*ₜₒₜₐₗ *= Ĥ_{P} + H_{Ĉ}.* That a ground state of the total Hamiltonian encodes a solution to the computational problem can be understood in the sense that said ground state contains information about the solution in question. The information can be revealed by performing one or more measurements on the ground state. Based on the outcome(s) of said measurement(s), a solution (e.g. a trial solution) of the computational problem can be determined.

The terminology "constraint Hamiltonian" stems from the property that the encoding of the Ising model problem (which may be the original computational problem or the auxiliary computational problem to which the original computational problem is mapped) into the problem Hamiltonian may introduce an increase in the number of degrees of freedom, in the sense that the ground space of the problem Hamiltonian alone includes quantum states that do not correspond to spin configurations of the Ising model, i.e. quantum states that cannot be "mapped back" onto the Ising model. To remove these additional degrees of freedom, the constraint Hamiltonian is introduced. The constraint Hamiltonians imposes an energy penalty, or energy constraint, to the aforementioned quantum states, such that the ground space of the sum of the problem Hamiltonian and the constraint Hamiltonian - i.e. the total Hamiltonian - only contains quantum states that correspond to the solution(s) of the computational problem. Specifically, each summand constraint Hamiltonian may impose a parity constraint on a subgroup of the constituents, such that, within said subgroup, the number of constituents that are in the quantum state |1> is even.

Specific encodings that allow to determine the problem Hamiltonian and a corresponding constraint Hamiltonian from the Ising spin model problem are described in EP 3 113 084 B1 and WO 2022/008057 A1.

As described above, the total Hamiltonian can be the sum of the problem Hamiltonian and the constraint Hamiltonian. In other embodiments, the total Hamiltonian may include additional terms, in other words the total Hamiltonian may include the sum of the problem Hamiltonian and the constraint Hamiltonian, plus optional additional terms. The additional terms may, for example, correspond to additional conditions ("side conditions") imposed on the solution of the computational problem.

Fig. 2 illustrates a constraint Hamiltonian *Ĥ*_{C} *=* Σ*ₗ Ĉₗ.* The constraint Hamiltonian *Ĥ*_{C} is a sum of summand constraint Hamiltonians *Ĉₗ* (in the example shown in Fig. 2, there are seven summand constraint Hamiltonians, yet this number is purely for the sake of illustration and the disclosure shall not be limited thereto). The constraint Hamiltonian and each summand constraint Hamiltonian are indicated in Fig. 2 by reference numerals 250 and 252, respectively. The set of summand constraint Hamiltonians 252 is divided into a first subset S₁ and a second subset S₂. In the example shown, the first subset S₁ consists of the summand constraint Hamiltonians *Ĉ*₁, *Ĉ*₂ and *Ĉ*₃ and the second subset S₂ consists of the summand constraint Hamiltonians *Ĉ*₄, *Ĉ*₅, *Ĉ*₆ and *Ĉ*₇. Again, this example is purely for the sake of illustration, and the disclosure shall not be limited thereto.

The first subset and the second subset of the summand constraint Hamiltonians of the constraint Hamiltonian are denoted herein by S₁ and S₂, respectively. The first subset S₁ and the second subset S₂ may be disjoint subsets. The union of the first subset S₁ and the second subset S₂ may form the entire set of summand constraint Hamiltonians of the constraint Hamiltonian. The first subset S₁ and the second subset S₂ may form a partition of the summand constraint Hamiltonians of the constraint Hamiltonian. Specific examples of first and second subsets of the summand constraint Hamiltonians are described below in section "Further aspects".

### N rounds of operations

The N rounds of operations may include 10 or more, particularly 100 or more, more particularly 1.000 or more rounds of operations, or even 100.000 or more rounds of operations.

Each round of the N rounds of operations includes preparing an initial quantum state for said round. The initial quantum state may be the same for all of the N rounds of operations. Alternatively, different initial quantum states may be prepared for different rounds of operations.

The initial quantum state of at least some, optionally all, of the N rounds of operations may be a ground state of a partial constraint Hamiltonian, wherein the partial constraint Hamiltonian is a sum of all summand constraint Hamiltonians taken from the second subset S₂. (Said partial constraint Hamiltonian is the "second partial constraint Hamiltonian" as described further below.) The partial constraint Hamiltonian has a ground space. The ground space consists of all quantum states that are ground states of the partial Hamiltonian. The ground space has a ground space basis, or orthonormal basis, consisting of a set of quantum basis states. For example, each quantum basis state may have the form |x> where x is a bit string, i.e. each quantum basis state may be a computational basis state (standard basis state). The initial quantum state of at least some, optionally all, of the N rounds of operations may be a superposition of all quantum basis states of the ground space basis. Specific examples of initial quantum states are described below in the section "Further aspects".

Each round of the N rounds of operations includes evolving the quantum system according to a sequence of unitary operators. The sequence includes problem-encoding unitary operators, constraint-enforcing unitary operators and unitary driver operators.

Each problem-encoding unitary operator is a unitary time evolution operator of a summand problem Hamiltonian of the problem Hamiltonian or is a unitary time evolution operator of a sum of summand problem Hamiltonians of the problem Hamiltonian. A problem-encoding unitary operator may have the form exp(it*Â*) where t is a coefficient and where *Â* is either equal to a single summand problem Hamiltonian *Ĥ*_{P,k} or equal to a sum of two or more summand problem Hamiltonians *Ĥ*_{P,k} (including the case where *Â* is the sum of all summand problem Hamiltonians *Ĥ*_{P,k}, so that *Â* is equal to *Ĥ*_{P}).

Each constraint-enforcing unitary operator is a unitary time evolution operator of a summand constraint Hamiltonian taken from the first subset S₁ of the summand constraint Hamiltonians of the constraint Hamiltonian, or is a unitary time evolution operator of a sum of summand constraint Hamiltonians taken from said first subset S₁. The constraint Hamiltonian H_{C} may be denoted by ${\hat{H}}_{C} = {\sum }_{i} {\hat{C}}_{i} + {\sum }_{j} {\hat{C}}_{j} ,$ wherein the first sum runs over all summand constraint Hamiltonians *Ĉᵢ* of the first subset S₁ and the second sum runs over all summand constraint Hamiltonians *Ĉⱼ* of the second subset S₂. The first sum is equal to the first partial constraint Hamiltonian as described herein (see the section "Further aspects"). The second sum is equal to the second partial constraint Hamiltonian as described herein. A constraint-enforcing unitary operator may have the form exp(it*Â*) where t is a coefficient and where *Â* is either equal to a single summand constraint Hamiltonian *Ĉᵢ* taken from the first subset S₁ or equal to a sum of several summand constraint Hamiltonians *Ĉᵢ* taken from the first subset S₁ (including the case where *Â* is the sum of all summand constraint Hamiltonians *Ĉᵢ* taken from the first subset S₁, so that *Â* is equal to the first partial constraint Hamiltonian).

Each constraint-enforcing unitary operator may act trivially on the ground space basis of the second partial constraint Hamiltonian. Therein, an operator is considered to act trivially on the ground space basis if the operator maps each quantum basis state of the ground space basis to itself up to a proportionality factor.

Each unitary driver operator commutes with every summand constraint Hamiltonian *Ĉⱼ* from the second subset S₂ of the summand constraint Hamiltonians. It may be the case that each unitary driver operator does not commute with one or more summand constraint Hamiltonians *Ĉᵢ* from the first subset S₁. Each unitary driver operator may have the form exp(it*Ĥ*), wherein t is a coefficient and *Ĥ* is an operator of the form Σ*ⱼ bⱼ X̂*ⱼ (including the case where the sum includes only one term), wherein each bⱼ is a coefficient and each *X̂*ⱼ is a tensor product of Pauli σ_{X} operators or a single Pauli σ_{X} operator.

Each unitary driver operator may act non-trivially on the ground space basis of the second partial constraint Hamiltonian. An operator is considered to act non-trivially on the ground space basis if the operator does not act trivially on the ground space basis. For each quantum basis state |x> of the ground space basis of the second partial constraint Hamiltonian, each unitary driver operator may map |x> to a linear combination of two or more quantum basis states of the ground space basis of the second partial constraint Hamiltonian.

A method according to embodiments described herein may include determining a driver Hamiltonian being a sum of summand driver Hamiltonians, wherein the driver Hamiltonian commutes with every summand constraint Hamiltonian of the second subset S₂. Each unitary driver operator may be a unitary time evolution operator of a summand driver Hamiltonian of the driver Hamiltonian or may be a unitary time evolution operator of a sum of two or more summand driver Hamiltonians of the driver Hamiltonian (including the case where the unitary driver operator is a unitary time evolution operator of the driver Hamiltonian, the driver Hamiltonian being the sum of all summand driver Hamiltonians).

The driver Hamiltonian may be an X-type operator. An X-type operator is an operator of the form Σ*ⱼ bⱼ X̂*ⱼ (including the case where the sum includes only one term), wherein each bⱼ is a coefficient and each *X̂*ⱼ is a tensor product of Pauli *σ̂ₓ* operators or a single Pauli *σ̂ₓ* operator. It shall again be understood that this choice of Pauli operators is without loss of generality in that corresponding orientations (x, y, z) can be chosen freely, or else the types of Pauli operators can be permuted. The driver Hamiltonian may employ a type of Pauli operators different from the problem Hamiltonian and the constraint Hamiltonian. In the section "Further aspects" below, the driver Hamiltonian is referred to as "hybrid driver Hamiltonian".

The sequence of unitary operators of a round of operations may be denoted by *Û*₁, *Û*₂, ..., *Û*ₘ wherein each *Û*ᵢ is a unitary operator. At least some, and optionally all, of the *Û*ᵢ may be problem-encoding unitary operators, constraint-enforcing unitary operators or unitary driver operators. The initial state of the round in question may be denoted |ψ>. Evolving the quantum system according to the sequence *Û*₁, *Û*₂, ..., *Û*ₘ can be understood in the sense that, after the sequence is applied, the quantum state of the quantum system is *Û*ₘ ... *Û*₂*Û*₁|ψ>, at least approximately.

That the quantum system is evolved according to a sequence *Û*₁, *Û*₂, ..., *Û*ₘ does not necessarily imply that each operator *Û*ᵢ of the sequence shall be implemented as a single unitary operator. Any operator *Û*ᵢ can itself be implemented as a product, or circuit, of several unitary operators (quantum gates). This may be advantageous if the unitary operator *Û*ᵢ is too complex to be implemented as a single unitary operator. Decomposing a unitary operator *Û*ᵢ as a quantum circuit of several simpler unitary operators (e.g. short-range d-body unitary operators with a small constant d) may facilitate the implementation of the unitary operation *Û*ᵢ.

Evolving the quantum system according to a sequence of unitary operators may include implementing at least some unitary operators of the sequence by a quantum circuit comprising a plurality of quantum gates. At least some, particularly all, of the problem-encoding unitary operators, constraint-enforcing unitary operators and unitary driver operators of the sequence may be implemented by a quantum circuit. The term "quantum circuit" refers to a logic gate circuit comprising logic gates, wherein each logic gate is a unitary operator (called "quantum gate" in this context).

Each quantum gate of a quantum circuit may be a short-range unitary operator. A short-range unitary operator is a unitary operator acting only within a subgroup of constituents of the quantum system, wherein any two constituents within the subgroup are distanced from each other by a distance of at most an interaction cut-off distance of the quantum system, as described herein. The short-range unitary operator does not act on any constituent outside of said subgroup of constituents.

Additionally or alternatively, each quantum gate of a quantum circuit may be a d-body unitary operator. Therein, d may be a small constant. For example, d may be 8 or less, or even 4 or less. A d-body unitary operator refers to a unitary operator acting only within a subgroup including at most d constituents of the quantum system. The d-body unitary operator does not act on any constituent outside of said subgroup. A single-body unitary operator is a d-body unitary operator where d = 1.

The sequence of unitary operators of at least some rounds of the N rounds of operations may include K problem-encoding unitary operators, and/or L constraint-enforcing unitary operators, and/or M unitary driver operators. Therein, K, L and/or M may be 5 or more, particularly 10 or more, more particularly 200 or more.

For each round of the N rounds of operations, evolving the quantum system according to the sequence of unitary operators of said round may include applying said sequence of unitary operations to the initial quantum state of said round.

The sequence of unitary operators of at least some of the N rounds of operations may have the form A₁ A₂ ··· Aₚ, or may include at least a sub-sequence of said form, wherein p ≥ 3, particularly p may be 10 or more, 100 or more, or 1000 or more. Each Aᵢ may be a product of the form Xᵢ Yᵢ Zᵢ, wherein one of Xᵢ, Yᵢ and Zᵢ is a problem-encoding unitary operator, another one of Xᵢ, Yᵢ and Zᵢ is constraint-enforcing unitary operator and yet another one of Xᵢ, Yᵢ and Zᵢ is a unitary driver operator. Examples of possible sequences of unitary operators are described in more detail below in the section "Further aspects".

Each round of the N rounds of operations includes performing a measurement of one or more constituents of the quantum system. For each round of the N rounds of operations, the measurement of said round may be performed on a quantum state resulting from evolving the quantum system according to the sequence of unitary operators of said round. Performing a measurement of the one or more constituents may include measuring a Pauli operator, e.g. the Pauli operator σ_{z}, for each of the one or more constituents.

In some embodiments, the method includes a feed-forward of information, wherein the sequence of unitary operators to be applied in a round of operations may depend on measurement outcomes of measurements performed in one or more, e.g. at least two, previous rounds of operations. The N rounds of operations may include one or more adaptive rounds of operations, for example, 10 or more, 100 or more, 1000 or more or even 100000 or more adaptive rounds. For each adaptive round of operations, the unitary operators of the sequence of unitary operators of the adaptive round may be determined based on at least one measurement outcome of a measurement performed in a previous round of the N rounds of operations.

The N rounds of operations may include a first round of operations. Evolving the quantum system according to the sequence of unitary operators of the first round of operations may result in a first quantum state of the quantum system. Performing the measurement in the first round may include measuring an energy of the first quantum state. Measuring the energy of a quantum state, such as the first quantum state, may include measuring a Hamiltonian, such as the total Hamiltonian as described herein.

The N rounds of operations may include a second round of operations performed after the first round of operations. Evolving the quantum system according to the sequence of unitary operators of the second round of operations may result in a second quantum state of the quantum system. Performing the measurement in the second round may include measuring an energy of the second quantum state. Measuring the energy of the second quantum state may include measuring a Hamiltonian, such as the total Hamiltonian.

The method described herein may include comparing the energy of the first quantum state with the energy of the second quantum state. The method may include determining the sequence of unitary operators to be applied in a third round of the N rounds of operations, wherein the third round is to be performed after the second round. The sequence of unitary operators to be applied in the third round may be determined based at least on the comparison of the energy of the first quantum state with the energy of the second quantum state.

For example, if the comparison of the energy of the first quantum state with the energy of the second quantum state reveals that the energy of the first quantum state is smaller than the energy of the second quantum state, the user may conclude that the first quantum state is closer to the ground state of the measured Hamiltonian (e.g. the total Hamiltonian) than the second quantum state. In light thereof, the user may reject the sequence of unitary operators of the second round and return to the sequence of unitary operations of the first round. Starting from the sequence of unitary operations of the first round, the user may make a small perturbation to said sequence, e.g. by replacing one or just a few operators from said sequence by different operators. The resulting sequence may be the sequence of unitary operators to be applied in the third round of operations.

Alternatively, if the comparison of the energy of the first quantum state with the energy of the second quantum state reveals that the energy of the first quantum state is larger than (or equal to) the energy of the second quantum state, the user may conclude that the second quantum state is closer to the ground state of the measured Hamiltonian than the first quantum state. In light thereof, the user may accept the sequence of unitary operators of the second round. Starting from the sequence of unitary operations of the second round, the user may make a small adjustment or perturbation to said sequence. The resulting adjusted sequence may be the sequence of unitary operators to be applied in the third round of operations.

The user can proceed in a similar manner throughout all rounds of operations, namely: (i) measure the energy of the quantum state obtained after applying the sequence of unitary operations of the current round of operations (e.g. by measuring the total Hamiltonian); (ii) compare the measured energy of the current round with a measured energy of a previous round; (iii) if the measured energy of the current round is larger than the measured energy of the previous round, reject the quantum state of the current round and accept the sequence of unitary operations of the previous round; alternatively, if the measured energy of the current round is smaller than the measured energy of the previous round, accept the sequence of unitary operations of the current round; (iv) starting from the accepted sequence of unitary operations, perturb said accepted sequence to obtain a sequence of operations for a next round of operations.

As the number N of rounds is increased, an increasingly larger set of quantum states is prepared, wherein the energy of subsequent quantum states gradually decreases (or at least does not increase). Accordingly, the energy gradually approaches the ground state energy of the measured Hamiltonian. In light thereof, embodiments described herein provide a gradually improving approximation to the ground state of the measured Hamiltonian.

By measuring a suitable Hamiltonian in the respective rounds of operations, a solution to the computational problem can be determined. According to embodiments, a plurality of rounds of the N rounds of operations (in particular, substantially all of the N rounds) may each include measuring the total Hamiltonian of the quantum system. As described herein, the total Hamiltonian has a ground state containing information about a solution to the computational problem. Accordingly, if the quantum system is in the ground state of the total Hamiltonian, or close to the ground state, the information in question may be revealed by measuring the quantum system. A solution to the computational problem can be determined.

Although above an example is given of a method wherein the measured Hamiltonian is the total Hamiltonian, other Hamiltonians may also be measured. In particular, the total Hamiltonian may be modified or transformed so that the form of the modified Hamiltonian may differ from the total Hamiltonian, but the modified Hamiltonian still has the property that the ground state of the modified Hamiltonian encodes a solution to the computational problem. For example, modifying the total Hamiltonian by a change of basis of each constituent, or of a plurality of small groups of constituents, may change the form of the Hamiltonian, but does not change the property that the ground state of the modified Hamiltonian encodes the solution to the computational problem.

Although above an example is given of a method wherein one or more energies are measured, further or alternative measurements may also be performed. For example, instead of measuring an energy of a quantum state, the quantum fidelity of the quantum state with respect to a target state may be measured. For example, the target state may be a ground state of a target Hamiltonian (such as the total Hamiltonians as described herein, or other Hamiltonians). The quantum fidelity of two quantum states |ψ₁> and |ψ₂> refers to the quantity |<ψ₁|ψ₂>|.

### Outputting the result

The method according to embodiments described herein includes outputting a result of the quantum computation. The result of the quantum computation may be based on one or more measurement outcomes of one or more measurements performed in the N rounds of operations. The method may include processing, e.g. by a classical computing system as described herein, one or more measurement outcomes of one or more measurements performed in the N rounds op operations. The method may include outputting the result of the quantum computation based on the one or more processed measurement outcomes.

The outputted result of the quantum computation may be a solution, particularly a trial solution, of the computational problem. A trial solution may, for example, be an approximate solution of the computational problem.

### Subsystems

It may be beneficial to choose the first subset S₁ of summand constraint Hamiltonian in a manner such that the summand constraint Hamiltonians in said first subset effectively define a partitioning of the quantum system into smaller groups of constituents, called subsystems. This approach is also referred to herein as "modularization".

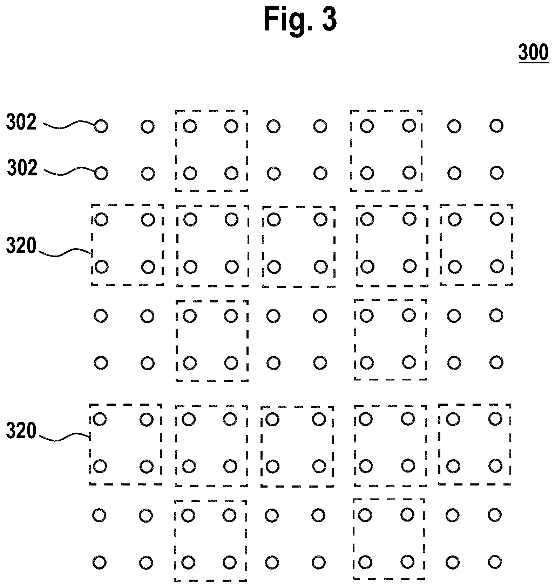

Figs. 3-4 show a schematic representation of a quantum system 300 including constituents 302. The constituents 302 may be spatially arranged according to a two-dimensional lattice (called "first two-dimensional lattice" below).

In Fig. 3, the summand constraint Hamiltonians 320 of the first subset S₁ of summand constraint Hamiltonians are shown. (For ease of presentation, the summand constraint Hamiltonians of the second subset S₂ are not shown.) The summand constraint Hamiltonians 320 are schematically depicted as rectangles acting on groups of constituents (4-body operators, in the present example). The summand constraint Hamiltonians 320 are spatially arranged according to a grid pattern (the "second two-dimensional lattice" as described below). In the example shown, the grid pattern includes two horizontal lines and two vertical lines of summand constraint Hamiltonians 320.

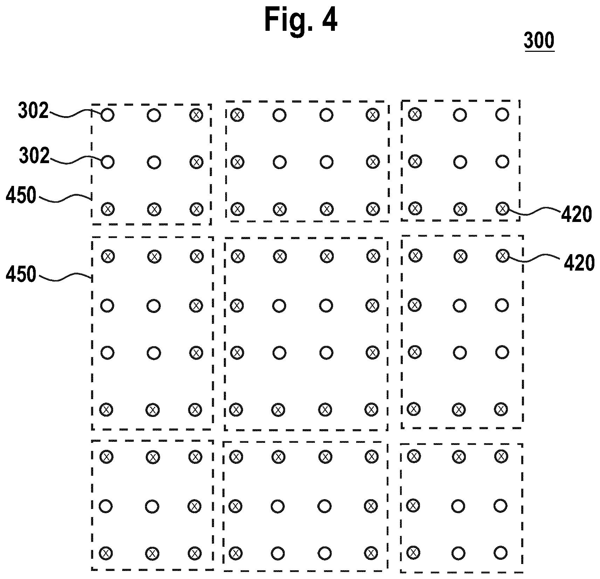

The spatial arrangement of the summand constraint Hamiltonians 320 may define a subdivision of the quantum system 300 into subsystems 450, wherein each subsystem 450 consists of a subgroup of constituents 302, as shown in Fig. 4. Each subsystem 450 has a boundary formed by boundary constituents 420. In Fig. 4, the boundary constituents 420 are indicated by circles having a cross (X) provided therein. Each boundary constituent 420 of a subsystem 450 participates in a summand constraint Hamiltonian 320 acting jointly on the subsystem 450 in question and an adjacent subsystem 450. The boundary constituents 420 of a subsystem 450 form a boundary between the subsystem and one or more adjacent subsystems 450.

The quantum system may include subsystems. Each subsystem may include a subset of the constituents of the quantum system. The subsystems may be disjoint. Different subsystems may not have a constituent in common. Each subsystem may have boundary constituents forming part of, and in particular forming, a boundary between the subsystem and one or more adjacent subsystems.

Each boundary constituent may participate in a quantum interaction represented by a summand constraint Hamiltonian from the first subset S₁ of the summand constraint Hamiltonians of the constraint Hamiltonian. That a boundary constituent participates in a quantum interaction represented by a summand constraint Hamiltonian means that said summand constraint Hamiltonian acts on the boundary constituent in question. For each subsystem, each boundary constituent of the subsystem may be coupled to a boundary constituent of an adjacent subsystem by a quantum interaction that is represented by a summand constraint Hamiltonian of the first subset of summand constraint Hamiltonians.

Each subsystem may have a total number of constituents that is much smaller than the total number of constituents of the quantum system. For example, the total number of constituents of each subsystem may be 30% or less, 20% or less, or 10% or less, or even 1% or less, of the total number of constituents of the quantum system. Each subsystem may have a total number of constituents that is independent of a size of the computational problem. The total number of constituents of each subsystem may be a constant. In other words, the subdivision of the quantum system into subsystem by virtue of the spatial arrangement of the summand constraint Hamiltonians from the first subset may be such that the number of constituents in each subsystem is bounded by a constant independent of the size of the computational problem, and, correspondingly, independent of the total number of constituents of the entire quantum system.

According to some embodiments, each unitary driver operator may act fully inside one of the subsystems of the quantum system. A unitary driver operator may act only on constituents belonging to a same subsystem. In cases where the size of each subsystem of the quantum system is relatively small as compared to the size of the entire quantum system, a unitary operator acting fully inside one of the subsystems is a manageable object of reduced complexity. In particular, the circuit depth required for implementing such a unitary driver operator may be relatively small. For example, if the size (total number of constituents) of the subsystem is constant, i.e. independent of the size of the computational problem, then a unitary driver operator acting fully inside said subsystem can be implemented by a quantum circuit of constant depth, i.e. a highly parallelized quantum circuit, which is advantageous because it requires only a small amount of computational (time) resources.

Each unitary driver operator may be realizable, or realized, by a quantum circuit of constant depth. The term "depth" as used in the present disclosure refers to the notion of circuit depth of a circuit of logic gates as known in the field of computer science. A circuit of quantum gates, i.e. unitary operators, acting on a set of constituents of the quantum system can be said to be parallelizable to a depth D if the quantum gates in the circuit can be grouped into D layers (slices) of gates, such that in each layer there are no two quantum gates acting on the same constituent. In other words, within each layer, each constituent is acted upon by at most one quantum gate. The depth is a measure of how much a circuit can be parallelized. Operations within a same layer of the circuit can be performed in the same time step ("in parallel"), since the gates within one layer act on different constituents. Therefore, a circuit which is parallelizable to a depth D can be carried out in D time steps. For a more detailed discussion of the notion of depth, reference is made to WO 2020/156680 A1.

A constant depth refers to a depth which is independent of the number of constituents of the quantum system. A constant depth may be a depth which is much smaller than the number of constituents in the quantum system. For example, a constant depth may be a depth which is 30% or less, in particular 20% or less, more particularly 10% or less, of the number of constituents of the quantum system. As the method described herein is used for solving computational problems of increasing sizes, quantum systems of increasing system sizes are needed. According to embodiments, irrespective of the size of the computational problem, each unitary driver operator may be realized by a quantum circuit of constant depth D. That is, unlike the number of constituents in the quantum system, the depth D does not grow as a function of the size of the computational problem but is bounded from above by a constant. For example, D may be at most 100.

The constituents of the quantum system may be arranged according to a first two-dimensional lattice (such as the constituents 302 shown in Fig. 3), such as a two-dimensional rectangular lattice, or at least a portion thereof. The first two-dimensional lattice may include plaquettes. A plaquette, or elementary square, may consist of four constituents of the quantum system that are spatially arranged according to a square. Each summand constraint Hamiltonian of the constraint Hamiltonian may be a 4-body operator acting on a plaquette or a 3-body operator acting on a subset of 3 constituents within a plaquette.

The set formed by the boundary constituents of all subsystems of the quantum system (e.g. the boundary constituents 420 shown in Fig. 4) may be arranged according to a second two-dimensional lattice (or at least a portion of a second two-dimensional lattice). The second two-dimensional lattice may have a larger lattice spacing than the first two-dimensional lattice.

### Exemplary implementations

The quantum system and its constituents (such as qubits) are physical entities, as explained herein. Specific implementations of the quantum system/the constituents and of the interactions involved in the method described herein are briefly discussed below. Further details can be found in EP 3 113 084 B1 and WO 2020/156680 A1. However, the method described herein can be carried out on any other specific implementation of said physical entities and of their interactions, and the exemplary implementations shall not be considered as limiting.

The constituents may be superconducting qubits, e.g. transmon or flux qubits. Superconducting currents propagating clockwise and counter-clockwise, respectively, in the primary superconducting loop can form the quantum basis states |1> and |0> of the superconducting qubit. Further, a magnetic flux bias through the secondary superconducting loop can couple the quantum basis states |0> and |1>.

A single-body Hamiltonian of the form ${\sum }_{k} {a}_{k} {\hat{σ}}_{z}^{\left(k\right)}$ can be realized by magnetic fluxes interacting with the superconducting qubits. A constraint Hamiltonian, for example a plaquette Hamiltonian, can be realized using ancillary qubits, wherein an ancillary qubit may be arranged inside each plaquette. Interactions between qubits of the form ${K}_{km} {\hat{σ}}_{z}^{\left(k\right)} {\hat{σ}}_{z}^{\left(m\right)}$ can be realized by an inductive coupling unit including a superconducting quantum interference device. Applying an adjustable magnetic flux bias to the superconducting quantum interference device allows tuning the coefficient Kₖₘ. A summand constraint Hamiltonian can then be realized by H_{sr,p}=C(σ_{z}⁽¹⁾+ σ_{z}⁽²⁾+ σ_{z}⁽³⁾+ σ_{z}⁽⁴⁾-2σ_{z}^{(p)}-1)², which includes only pairwise interactions of the form σ_{z}^{(k)}σ_{z}^{(m)} and single-body σ_{z}^{(l)} terms corresponding to imposed energy differences between the |0> and |1> quantum basis states. Here, σ_{z}^{(p)} represents the ancilla qubit. Alternatively, a constraint Hamiltonian can be realized without ancillary qubits, e.g., using three-island superconducting devices as transmon qubits.

Further, a magnetic flux bias through the primary superconducting loop of the superconducting qubit may be set such that the basis states |0> and |1> have the same energy, i.e. the energy difference for these basis states is zero. Further, a magnetic flux bias through the secondary superconducting loop can couple the basis states |0> and |1>. Accordingly, a Hamiltonian of the form $h {\hat{σ}}_{x}^{\left(k\right)}$ can be realized for the superconducting qubit.

For superconducting charge or flux qubits, CNOT operations can be realized with an additional capacitive element coupled to two qubits. The interaction strength is tuned by magnetic or electric flux applied to the additional element. Alternatively, the two qubits are coupled to two modes of a Josephson ring modulator. Single-body unitary operators $exp \left(it{\hat{σ}}_{x}^{\left(k\right)}\right)$ or $exp \left(it{\hat{σ}}_{z}^{\left(k\right)}\right)$ can be realized with controlled external magnetic or electric flux.

For superconducting qubits, the qubit states |0> and |1> can be measured with high fidelity using a measurement device including a plurality of superconducting quantum interference devices, in particular N hysteretic DC superconducting quantum interference devices and N RF superconducting quantum interference device latches controlled by bias lines, wherein the number of bias lines scales according to √N.

Alternatively, the quantum system may be realized by systems of trapped ions, ultracold atoms, impurities in solid-state crystals (such as NV Centers), quantum dots, and the like. For background on how Hamiltonians, unitary operators and measurements can be implemented in such systems, reference is made to EP 3 113 084 B1 and WO 2020/156680 A1. As already mentioned above, these are exemplary implementations, which shall not be considered as limiting.

### Apparatus

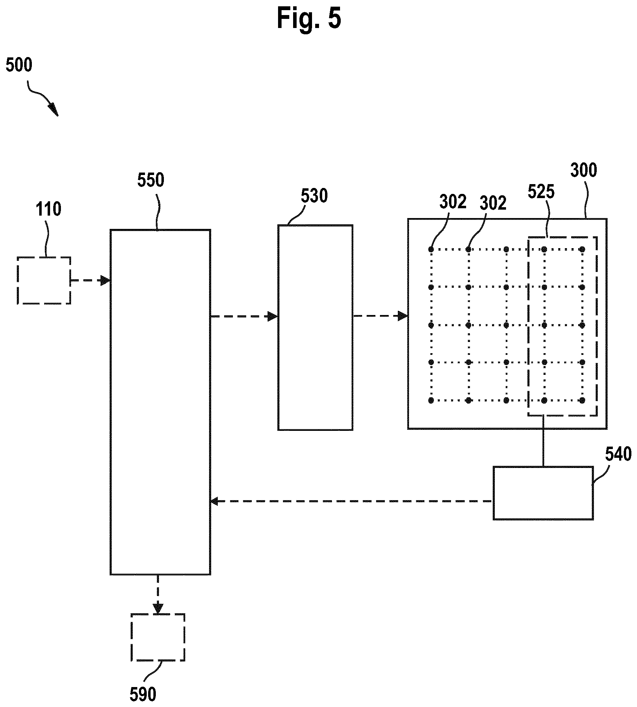

According to a further embodiment, and as illustrated in Fig. 5, an apparatus 500 for performing a quantum computation is provided. The apparatus 500 includes a quantum system 300 comprising constituents 302. The apparatus 500 includes a classical computing system 550. The classical computing system 550 is configured to encode a computational problem 110 into a problem Hamiltonian of the quantum system 300. The problem Hamiltonian is a single-body Hamiltonian being a sum of summand problem Hamiltonians. The classical computing system 550 is configured to determine a constraint Hamiltonian of the quantum system 300, the constraint Hamiltonian being a sum of summand constraint Hamiltonians. A ground state of a total Hamiltonian encodes a solution to the computational problem, wherein the total Hamiltonian includes, or is, a sum of the problem Hamiltonian and the constraint Hamiltonian. The classical computing system 550 is configured to determine a first subset of the summand constraint Hamiltonians of the constraint Hamiltonian and a second subset of the summand constraint Hamiltonians of the constraint Hamiltonian. The apparatus 500 includes a quantum processing system including a unitary evolution device 530 and a measurement device 540. The quantum processing system is configured to perform N rounds of operations, wherein N ≥ 2. Each round includes evolving, by the unitary evolution device 530, the quantum system 300 according to a sequence of unitary operators. The sequence includes problem-encoding unitary operators, constraint-enforcing unitary operators and unitary driver operators. Each problem-encoding unitary operator is a unitary time evolution operator of a summand problem Hamiltonian of the problem Hamiltonian or is a unitary time evolution operator of a sum of summand problem Hamiltonians of the problem Hamiltonian. Each constraint-enforcing unitary operator is a unitary time evolution operator of a summand constraint Hamiltonian taken from the first subset of the summand constraint Hamiltonians of the constraint Hamiltonian, or is a unitary time evolution operator of a sum of summand constraint Hamiltonians taken from said first subset. Each unitary driver operator is a unitary operator that commutes with every summand constraint Hamiltonian from the second subset of the summand constraint Hamiltonians of the constraint Hamiltonian. Each round includes performing, by the measurement device 540, a measurement of one or more constituents 302, indicated as portion 525, of the quantum system 300. The classical computing system 550 is further configured to output a result 590 of the quantum computation. The apparatus 500 may be configured to perform any aspects of the method according to embodiments described herein.

Each round of the N rounds of operations may include preparing, for example by at least one of the unitary evolution device and the measurement device, an initial quantum state.

The apparatus may include a controller. The controller may include or be the classical computing system. The controller may be connected to the quantum processing system. The controller may be configured to instruct the unitary evolution device to evolve the quantum system according to the sequence of unitary operators of each round of the N rounds of operations. The controller may be configured to instruct the measurement device to perform a measurement of one or more constituents of the quantum system in each of the N rounds. The classical computing system may be configured to receive a set of measurement outcomes from the measurement device, the measurement outcomes resulting from measurements performed during one or more of the N rounds of operations. The classical computing system may be configured to determine a sequence of unitary operators to be performed in a future round of the N round of operations based on one or more received measurement outcomes. The classical computing system may be configured to determine a result of the quantum computation, such as a solution of the computational problem, based on one or more received measurement outcomes.

The unitary evolution device and the measurement device may be configured for performing any unitary operator and any measurement, respectively, as described in relation to the method described herein. For example, the unitary evolution device may be configured to perform a quantum circuit comprising quantum gates to implement a unitary operation of a sequence of unitary operations of any round of the N rounds of operations. For example, the measurement device may be configured to perform any energy measurement, e.g. measurement of the total Hamiltonian, as described herein, such as measuring the energy of the first quantum state and/or the second quantum state as described herein.

A classical computing system is distinguished from a quantum computing system. A classical computing system can be understood as a computing system that stores and processes information using only classical information carriers, such as classical bits. A classical computing system may not use quantum information carriers, such as qubits, for processing information. A classical computing system may include a central processing unit (CPU) for processing information with classical bits and/or a memory for storing information with classical bits. A classical computing system may include one or more conventional computers and/or a network of conventional computers, such as personal computers (PCs).

The classical computing system of the apparatus described herein may be configured to determine a driver Hamiltonian being a sum of summand driver Hamiltonians, wherein the driver Hamiltonian commutes with every summand constraint Hamiltonian of the second subset of the summand constraint Hamiltonians. Each unitary driver operator may be a unitary time evolution operator of a summand driver Hamiltonian of the driver Hamiltonian or may be a unitary time evolution operator of a sum of two or more summand driver Hamiltonians of the driver Hamiltonian.

The classical computing system may be configured to perform any classical computational operation of the method described herein, such as the feed forward of information in the adaptive rounds of operations, the comparison of measured energies to determine the sequence of unitary operations to be applied in a future round of operations, and the like.

### Further aspects

### 1 Introduction

The Quantum Approximate Optimization Algorithm (QAOA) is a gate-based algorithm designed for solving combinatorial optimization problems on contemporary noisy quantum devices. This algorithm can in principle be applied to generic combinatorial optimization problems. However, the limited inter-qubit connectivity of quantum devices complicates its implementation and can be detrimental for practical QAOA performance. The parity architecture described below resolves the mismatch between the connectivity of the problem-and hardware graph by mapping problem-defining interactions onto a single-body problem Hamiltonian, while restricting the enlarged Hilbert space by a short-range constraint Hamiltonian. In particular, starting with a classical compilation step to adjust the arrangement of qubits and constraints to the optimization problem, the parity architecture enables mapping of generic, i.e. long-range and higher-order connected, optimization problems onto a fixed qubit layout utilizing only short-range quantum interactions.

QAOA implementations for the parity architecture in which the constraint terms are explicitly enforced through an energy penalty can be considered. Alternatively, conserving the constraint terms can be achieved implicitly by making the involved operators commute with the constraint Hamiltonian. While the first approach enables a parallelizable implementation with low circuit depth in the QAOA, the latter can lead to significantly improved success probabilities.

According to embodiments described herein, a hybrid approach is provided, which keeps the required quantum circuit depth constant while reducing the number of constraint terms to be enforced explicitly and thus increasing performance. This is achieved by partitioning the constraint terms into a subset that is enforced explicitly (the first subset of summand constraint Hamiltonians, as described herein) and a subset where the constraints are conserved implicitly by adapting the driver Hamiltonians (the second subset of summand constraint Hamiltonians, as described herein).

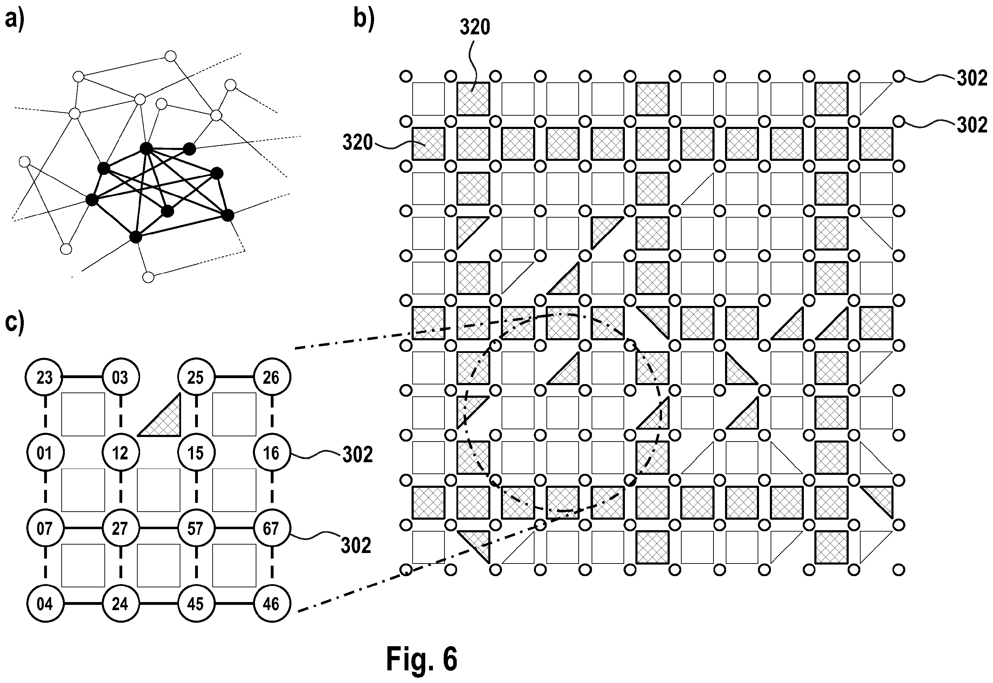

Fig. 6 shows an example of a modularization of a parity-compiled computation problem, as described in more detail below. Fig. 6(a) shows a problem graph to be implemented. The problem graph includes nodes and edges between the nodes. At each node of the problem graph, a classical spin *sᵢ* = ±1 is located. An edge between two nodes represents the presence of a (non-zero) interaction between the corresponding classical spins. A subgraph of the problem graph is shown, the subgraph having nodes depicted as solid black dots, with edges therebetween. Fig. 6(b) shows a quantum implementation layout of the parity encoded problem. The circles represent constituents 302, more specifically parity qubits. In the example shown, each parity qubit corresponds to an edge of the problem graph shown in Fig. 6(a), i.e. an interaction between two classical spins. For an interaction between classical spins *sᵢ* and *sⱼ*, the corresponding parity qubit may be labelled by ij (as shown in Fig. 6(c)). The squares and triangles provided either without or with hatching represent implicitly enforced constraint terms and explicitly enforced constraint terms, respectively. Squares represent four-body constraint terms, triangles represent three-body constraint terms. Explicitly enforced constraint terms (squares and triangles with hatching) are used to divide the quantum system into modules, or subsystems, which can be treated separately. The explicitly enforced constraint terms are the summand constraint Hamiltonians 320 of the first subset S₁ of summand constraint Hamiltonians, as described herein. Fig. 6(c) shows an exemplary module, corresponding to the highlighted subgraph in Fig. 6(a), with hybrid driver lines shown as solid and dashed lines connecting subsets of qubits. The modularization leads to a highly parallelizable circuit implementation of the required driver terms.

In other words, Fig. 6c shows an example layout of parity qubits and constraint terms for a computational problem described by the subgraph indicated in Fig. 6a. The layout in Fig. 6c has a constraint term enforced explicitly (hatched triangle) while the other constraint terms (squares without hatching) are implicitly conserved by the driver, which acts on qubits in one of the shown lines simultaneously. By choosing which constraint terms are in which subset, we can divide bigger layouts into smaller modules (see Fig. 6b), enabling a parallel implementation of all required unitaries with an adjustable maximal circuit depth.

### 2 Parity QAOA

The task of finding solutions to computational problems such as combinatorial optimization problems can be formulated as energy minimization of general (classical) N-spin Hamiltonian functions of the form $H = {\sum }_{i = 1}^{N} {J}_{i}^{\left(1\right)} {s}_{i} + {\sum }_{i < j}^{N} {J}_{ij}^{\left(2\right)} {s}_{i} {s}_{j} + {\sum }_{i < j < l}^{N} {J}_{ijl}^{\left(3\right)} {s}_{i} {s}_{j} {s}_{l} + ⋯ ,$ Equation 1 where *sᵢ* = ±1 denote classical spin variables (also called "problem spins" herein) and the coefficients $\left\{{J}_{i}^{\left(1\right)},{J}_{ij}^{\left(2\right)},{J}_{ijl}^{\left(3\right)},…\right\}$ describe the strengths of single-body terms and (potentially long-range) products of up to *k* spin variables. We denote by *K* the number of non-zero coefficients in the above expression for the Hamiltonian function H. Further, *n_{d}* denotes the number of spin-flip symmetries in the Hamiltonian function H.

Due to the two-body and quasi-local nature of physical interactions between constituents, such as qubits, of a quantum system, it is difficult, if not unfeasible, to implement couplings as occurring in Equation 1 directly in quantum hardware. In the present disclosure, we utilize the parity mapping described in EP 3 113 084 B1 and WO 2022/008057 A1, that allows to encode arbitrary higher-order long-range k-body terms into a Hamiltonian (the "total Hamiltonian" as described herein) of a quantum system comprising qubits (or more generally constituents) arranged on a square lattice, wherein the total Hamiltonian involves only short-range interactions. This involves mapping the k-fold product of a subset of problem spins *sᵢ* onto a single qubit (called herein "parity qubit", denoted by *σ̂*), e.g. ${J}_{ijl}^{\left(3\right)} {s}_{i} {s}_{j} {s}_{l} ↦ {J}_{m} {\hat{σ}}_{z}^{\left(m\right)}$, where we label each parity qubit with the corresponding k-tuple of problem spin indices. That is to say, in the example given, the index m is shorthand for the 3-tuple ijl. As a result, the *K* non-zero interaction terms of Equation 1, which define the computational problem, are represented by *K* ≥ *N* single-body quantum operations of strength *Jₘ* acting on *K* respective parity qubits. The corresponding single-body Hamiltonian, referred to herein as problem Hamiltonian, has the form ${\hat{H}}_{P} = {\sum }_{m} {J}_{m} {\hat{σ}}_{z}^{\left(m\right)}$ (wherein the terms ${J}_{m} {\hat{σ}}_{z}^{\left(m\right)}$ are summand problem Hamiltonians as described herein). The Hilbert space formed by the K parity qubits, possibly supplemented with ancillary qubits, is denoted by 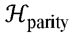 . In order to ensure that the optimization problem is embedded in the low-energy subspace (ground space) of 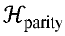 , *K - N + n_{d}* constraint terms *Ĉₗ* are provided in addition to the problem Hamiltonian. Accordingly, a constraint Hamiltonian of the form *Ĥ*_{C} *=* Σ*ₗ Ĉₗ* is provided, where *Ĉₗ* are referred to herein as summand constraint Hamiltonians, or constraint terms for short. This gives rise to a total Hamiltonian of the form ${\hat{H}}_{total} = {{{\sum }_{m} {J}_{m} {\hat{σ}}_{m}^{\left(m\right)}}_{︸}}_{{\hat{H}}_{P}} + {{{\sum }_{l} {\hat{C}}_{l}}_{︸}}_{{\hat{H}}_{C}} .$ Equation 2 The solution of the computational problem is encoded in the ground space of the total Hamiltonian *Ĥ*ₜₒₜₐₗ. The summand constraint Hamiltonians *Ĉₗ* represent short-range interactions between small groups of qubits. Specifically, the summand constraint Hamiltonians are short-range three-, or four-body Hamiltonians acting on, or within, 2 × 2 plaquettes of qubits (cf. Fig. 6) as ${\hat{C}}_{l} = \frac{{C}_{l}}{2} \left(1-{\hat{σ}}_{z}^{\left({l}_{1}\right)}{\hat{σ}}_{z}^{\left({l}_{2}\right)}{\hat{σ}}_{z}^{\left({l}_{3}\right)}\left[{\hat{σ}}_{z}^{\left({l}_{4}\right)}\right]\right) ,$ Equation 3 with the constraint strength *cₗ* > 0. Here, the *lᵢ* denote labels of qubits, such that all the indices of the corresponding problem spins appear an even number of times within each constraint term. The square brackets around ${\hat{σ}}_{z}^{\left({l}_{4}\right)}$ indicate that either three- or four-body constraints are possible. Constraint-satisfying quantum states (that is to say, quantum states that lie in the ground space of the constraint Hamiltonian) are therefore characterized by an even number of qubits in the | ↓〉-state (or |1〉-state) per constraint.

For further details regarding the parity mapping, reference is made to EP 3 113 084 B1 and WO 2022/008057 A1.

### 2.1 Explicit Parity QAOA

The Quantum Approximate Optimization Algorithm (QAOA) is designed to find low energy solutions of the quantum mechanical implementation *Ĥ* of the Hamiltonian function H of Equation 1 (wherein *Ĥ* is obtained by replacing each classical spin *sᵢ* of H by a *σ̂_{z}* Pauli operator), by evolving a quantum state alternately with a unitary time evolution of a driver Hamiltonian ${\hat{H}}_{B} = {\sum }_{i}^{N} {\hat{σ}}_{x}^{\left(i\right)}$ and a unitary time evolution of the Hamiltonian *Ĥ* for variable durations. To implement the QAOA in the parity architecture, the single-qubit driver Hamiltonian ${\hat{H}}_{X} = {\sum }_{i}^{K} {\hat{σ}}_{x}^{\left(i\right)}$ may be chosen in an analogous manner, while the Hamiltonian *Ĥ* may be replaced by the total Hamiltonian *Ĥ*ₜₒₜₐₗ *= Ĥ*_{P} *+ Ĥ*_{C} described above; see WO 2020/156680 A1. A parity-QAOA sequence of depth *p* thus corresponds to variationally evolving the quantum system with Hamiltonians *Ĥ*_{X}, *Ĥ*_{P} and *Ĥ*_{C} as $\left|ψ\right〉 = {\prod }_{j = 1}^{p} {e}^{- {iβ}_{j} {\hat{H}}_{X}} {e}^{- {iγ}_{j} {\hat{H}}_{P}} {e}^{- {iΩ}_{j} {\hat{H}}_{C}} {\left|+\right〉}^{⊗ K} ,$ Equation 4 where the variational parameters *βⱼ*, *γⱼ* and *Ωⱼ* are optimized in a quantum-classical feedback loop (adaptive rounds of operations, as described herein), in order to minimize 〈*ψ*|*Ĥ*ₜₒₜₐₗ|*ψ*〉. As a consequence, during optimization, the constraint terms (summand constraint Hamiltonians) of the constraint Hamiltonian are treated on the same footing as the problem-encoding single-body terms (summand problem Hamiltonians) of the problem Hamiltonian. That is to say, as regards the constraint terms, it is the case that unitary time evolution operators of the form *e^{-iΩ}^{Ĥ}^{_{C}}* are implemented explicitly in quantum hardware.

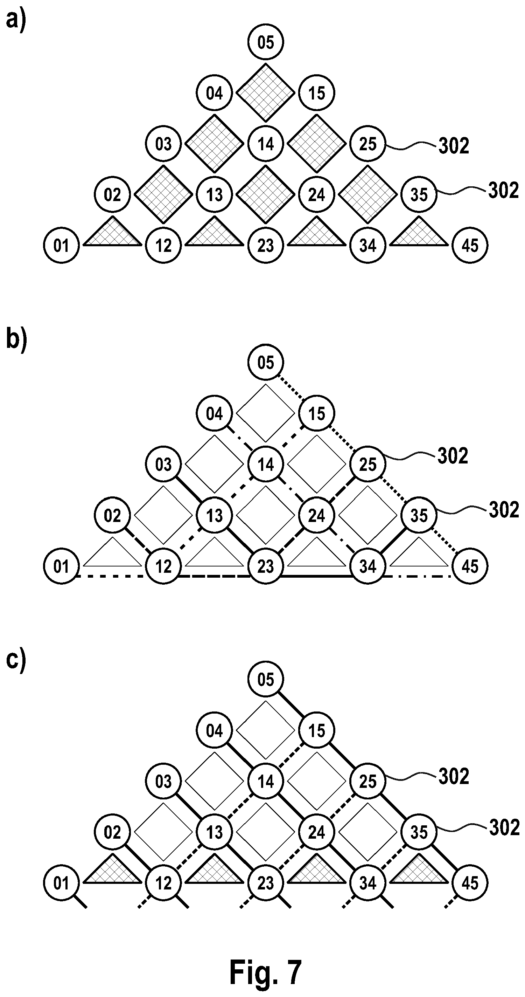

Figs. 7a)-c) show an example of a parity-encoded complete graph with six spin variables. The exemplary problem graph (not shown) has six nodes, each provided with a spin variable *sᵢ* = ±1 (where i ranges from 0 to 5), and an edge is provided between every pair of nodes (complete graph), i.e. an interaction is present between every pair of classical spins. The parity qubits are arranged on a two-dimensional lattice. The parity qubits are labelled by ij, wherein i and j range from 0 to 5. A parity qubit ij corresponds to an interaction between classical spins *sᵢ* and *sⱼ.* The squares and triangles represent 4-body and 3-body constraint terms (summand constraint Hamiltonians), respectively, of the constraint Hamiltonian. In Fig. 7a), all constraint terms are enforced explicitly (represented by squares and triangles having hatching). The driver Hamiltonian contains single-qubit *σ̂ₓ* operators on all qubits.

### 2.2 Implicit Parity QAOA

Instead of enforcing the constraint Hamiltonian *explicitly* in the QAOA protocol by means of time evolution unitary operators of the form *e^{-iΩ}^{Ĥ}^{_{C}}* as described above, we can alternatively start with an initial quantum state that belongs to the constraint-fulfilling subspace ${H}_{CF} = \left\{\left|ψ\right〉\left.∈{H}_{parity}\right|{\hat{H}}_{C}\left|ψ\right〉=0\right\}$ Equation 5 and restrict the subsequent dynamics to that subspace by providing a driver Hamiltonian ${\hat{H}}_{X}^{imp}$ which is configured such that the constraint terms are conserved *implicitly,* in other words the time evolution defined by the driver Hamiltonian is such that the quantum system never leaves the constraint-fulfilling subspace, thereby removing the need for time evolution operators of the form *e^{-iΩ}^{Ĥ}^{_{C}}*. That is, a driver Hamiltonian ${\hat{H}}_{X}^{imp}$ fulfilling the condition $\left[{\hat{H}}_{C}, {\hat{H}}_{X}^{imp}\right] = 0$ Equation 6 may be provided.

Fig. 7b) illustrates the notion of implicit Parity QAOA. The indicated lines connecting certain subsets of qubits (e.g. subset {05, 15, 25, 35, 45}, subset {01, 12, 13, 14, 15}, and so on) denote qubits which can be flipped simultaneously without leaving the constraint-fulfilling subspace (constraint-preserving driver lines). All constraints are implicitly enforced via the driver Hamiltonian, and no energy penalty for constraint terms is needed. For the case of the complete graph as illustrated in Figs. 7a)-c), the sets of qubits which can be flipped simultaneously without leaving the constraint-fulfilling subspace are the sets of qubits whose labels share a common problem spin index (e.g. the set, or driver line, consisting of qubits 01, 12, 13, 14 and 15 having the label 1 in common), and thus every set can be directly associated with one of the problem spins (for example, the aforementioned driver line consisting of qubits 01, 12, 13, 14 and 15 can be associated with the classical spin *s*₁). In general, all sets of qubits intersecting an even number of times with each involved constraint term are a valid choice. Building the driver Hamiltonian ${\hat{H}}_{X}^{imp}$ out of products of *σ̂ₓ* acting on these sets of qubits thus satisfies Equation 6. In the example shown in Fig. 7b) this is the parity-mapped analogue of a driver Hamiltonian acting on quantum mechanical problem spins: every line in the figure can be associated with exactly one problem spin, namely the spin whose index occurs in all parity qubits of the set. A flip of the spin variable *sᵢ* would be reflected in a flipping of the quantum state of all the parity qubits including that index.

Generally, we may define the elements of a constraint-preserving driver Hamiltonian ${\hat{H}}_{X}^{imp}$ as follows.

Let us consider a set *Q^{µ}* of qubits that can be simultaneously flipped without changing which constraint terms *Ĉₗ* are fulfilled (that a constraint term is "fulfilled" means that the quantum system is in a ground state of the constraint term). These qubits are typically arranged on the layout along a line (see for example Fig. 7b)), or in more general cases manifest as a tree graph of adjacent qubits. **In** the following, we refer to these sets *Q^{µ}* as constraint-preserving driver lines, or *driver lines* for short.

The index *µ* enumerates the driver lines for a given computational problem. With each driver line, we associate a *driver term* ${\hat{X}}^{\left(μ\right)} = {\prod }_{k ∈ {Q}^{μ}} {\hat{σ}}_{x}^{\left(k\right)}$ Equation 7 which has the property $\left|ψ\right〉 ∈ {H}_{CF} ⇔ {\hat{X}}^{\left(μ\right)} \left|ψ\right〉 ∈ {H}_{CF} .$ Equation 8 We refer to the number of qubits in a driver line as the *length* of the driver line. A set *D* of driver lines is called *independent* if and only if no element *Q^{µ}* ∈ D can be obtained via symmetric difference of (multiple) other elements in *D.* Furthermore, we call a set *D* of driver lines *valid* if and only if *D* is independent and |*D*| *= N - n_{d}* holds. The set of driver terms associated with a valid set of driver lines allows for all operations that correspond to flipping problem spins. Two driver lines *Q^{µ}* and *Q^{v}* are said to *overlap* if and only if *Q^{µ}* ∩ *Q^{v}* ≠ Ø.

In contrast to the QAOA approach enforcing all constraints explicitly, we now consider the performance of parity-QAOA utilizing a constraint-preserving driver Hamiltonian of the form ${\hat{H}}_{X}^{imp} = {\sum }_{{Q}^{μ} ∈ D} {\hat{X}}^{\left(μ\right)} ,$ Equation 9 consisting of the operators associated with a valid set of constraint-preserving driver lines. In the following, we will use D to refer to a set of driver lines as well as to the set of its associated driver terms. Provided that we start from a constraint-fulfilling quantum state, a unitary time evolution defined by such a driver Hamiltonian only introduces transitions to other constraint-fulfilling quantum states and therefore restricts the dynamics to 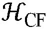 .

For the example shown in Fig. 7b), a valid set of driver terms is given by *D =* {*X̂*^{(*µ*)} | 1 ≤ *µ < N*}*,* where ${\hat{X}}^{\left(μ\right)} = {\prod }_{ν < μ} {\hat{σ}}_{x}^{\left(νμ\right)} {\prod }_{ν > μ} {\hat{σ}}_{x}^{\left(μν\right)} .$ Equation 10 In this context, the superscript (*µv*) denotes the qubit involving the problem spin indices *µ* and v, in accordance with the labelling in Fig. 7. The corresponding driver lines are represented by the lines in the figure. Note that the number of driver terms is *N* - 1, as the missing term (involving the index 0) can be obtained as a product of the others and therefore does not occur in the driver Hamiltonian. Note that any other line could be omitted in ${\hat{H}}_{X}^{imp}$ instead of that. While the implementation of such operators *X̂*^{(*µ*)} is not feasible for analog devices due to the fact that these are long-range operators, the unitary time evolution operators *e*^{-*iβ*}*^{X̂}*^{^{(*µ*)}} can be implemented as a sequence of short-range CNOT-gates (where CNOT stands for controlled-NOT) and single qubit rotations; see Appendix A for details.

Note that the constraint-preserving driver Hamiltonian ${\hat{H}}_{X}^{imp}$ commutes with all constraint terms *Ĉₗ*, thus ensuring that the number of violated constraints stays constant during time evolution. In particular, as long as the initial quantum state is prepared in the constraint-fulfilling subspace, this guarantees that the variational quantum state that results from the unitary time evolution corresponds to a valid configuration of the problem spins and is therefore a potential solution of the computational problem throughout the time evolution.

Using the constraint-preserving driver Hamiltonian ${\hat{H}}_{X}^{imp}$, the variational QAOA-state can be prepared using the protocol $\left|ψ\right〉 = {\prod }_{j = 1}^{p} {e}^{- {iβ}_{j} {\hat{H}}_{X}^{imp}} {e}^{{iγ}_{j} {\hat{H}}_{P}} \left|{ψ}_{0}\right〉 ,$ Equation 11 with |*ψ*₀〉 being an appropriately chosen initial quantum state fulfilling all parity constraints *Ĉₗ.* Usually, |*ψ*₀〉 is chosen to be the equal superposition of all constraint-fulfilling computational basis states; for details on the preparation of this state, see Sec. 4. In the QAOA protocol defined by Equation 11, we have completely removed the time evolution operators of the form *e^{-iΩ}^{Ĥ}^{_{C}}* from the QAOA-protocol given in Equation 4 as all constraints now are implicitly conserved and do not have to be enforced with a unitary time evolution of the constraint Hamiltonian. Apart from saving one variational parameter per QAOA-cycle, this intrinsic fulfillment of the constraint terms also results in an exponential reduction of the size of the accessible Hilbert space, decreasing the probability of populating undesired quantum states and thus significantly enhancing the performance of the algorithm.

### 3 Hybrid approach and modularization

Implementing the unitary time evolution ${e}^{- iβ {\hat{H}}_{X}^{imp}}$ has a practical disadvantage. Arbitrarily long driver lines and their overlaps may render a parallel and low-depth implementation of the corresponding gate sequences impossible, especially for large system sizes. A fully implicit implementation would in general require a circuit depth scaling at least linearly with the system size (number of qubits) for implementing the unitary time evolution ${e}^{- iβ {\hat{H}}_{X}^{imp}}$. Since keeping the circuit depth small is a crucial point in many quantum computing setups, in the following a *hybrid* implementation is considered as a way to balance between the fully explicit and the fully implicit implementation of the constraint terms. In the hybrid approach, shorter driver lines are used to ensure a parallelizable implementation, requiring a reduced number of explicitly enforced constraints as compared to the fully explicit implementation (cf. Fig. 7c)).

Let us start in the fully implicit implementation. Switching a constraint term from an implicit to an explicit implementation doubles the dimension of the reachable subspace. Therefore, the driver Hamiltonian can contain one additional term, which does not commute with the constraint term in question. Consider a set of *n_{C}* constraint terms (referred to herein as the first subset of summand constraint Hamiltonians) which are to be explicitly enforced, i.e. by way of a unitary time evolution operator. The remaining constraint terms (referred to herein as the second subset of summand constraint Hamiltonians) are to be enforced implicitly, i.e. by providing a suitable driver Hamiltonian that conserves the constraints in question. We define the *hybrid* Hilbert space 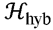 as the space spanned by the computational basis states which fulfill all constraints terms that are to be enforced implicitly (i.e. all summand constraint Hamiltonians in the second subset). Note that $dim \left({H}_{hyb}\right) = {2}^{N + {n}_{C} - {n}_{d}} .$ Equation 12 We now generalize the concepts of the implicit approach introduced in Sec. 2.2. A *hybrid driver line Q^{µ}* is a set of qubits that can be simultaneously flipped without leaving the hybrid subspace 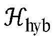 , given that the current state of the qubits lies inside that space. The index *µ* enumerates the hybrid driver lines for a given computational problem. In the same manner as described above for constraint-preserving driver lines, we associate a (hybrid) driver term *X̂*^{(*µ*)} with each hybrid driver line, corresponding to the product of all *σₓ*-operators acting on the qubits involved in the hybrid driver line in question. The definitions of independence and overlap of hybrid driver lines are analog to the definitions given in Sec. 2.2 for fully constraint-preserving driver lines. Note that just like before, the term "driver line" here is used irrespective of the actual geometrical arrangement of qubits in the layout.

A set *D* of hybrid driver lines is *valid* if and only if it is independent and any computational basis state in the constraint-fulfilling Hilbert space 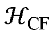 can be transformed to any other by applying operators associated with driver lines in D only. This definition is less strict than the definition of validity for fully constraint-preserving driver lines: The set D can contain *N - n_{d}* ≤ |*D*| ≤ *N* + *n_{C} - n_{d}* driver terms. Containing exactly *N + n_{C} - n_{d}* independent elements is a sufficient but not necessary condition for a set of hybrid driver lines to be valid. It can contain less lines, provided that all constraint-fulfilling quantum states, i.e. all quantum states in the constraint-fulfilling Hilbert space 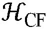 , can still be reached (and these are the only quantum states that we need to reach). In the following we will focus on the case |*D*| *= N + n_{C}* - *n_{d}.* The cases with less driver terms can be mapped back to this case by re-evaluating the partitioning of explicitly- and implicitly enforced constraint terms, as some of the originally explicitly enforced constraints will be naturally preserved by such a driver.

The hybrid driver lines are now sets of qubits that can be flipped simultaneously without violating any constraint terms, apart from the explicitly enforced constraint terms. The associated driver terms are defined analogous to Equation 7 and do not necessarily preserve the constraint fulfilling space 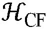 but the hybrid Hilbert space 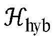 .

In a computational problem with N classical spin variables and a constraint Hamiltonian having a total number of ${n}_{C}^{tot}$ constraint terms of which *n_{C}* are enforced explicitly, we can consider the *hybrid* driver Hamiltonian as ${\hat{H}}_{X}^{hyb} = {\sum }_{μ = 1}^{N + {n}_{C} - {n}_{d}} {\hat{X}}^{\left(μ\right)} ,$ Equation 13 with driver terms *X̂*^{(*µ*)} associated with a valid set of hybrid driver lines. The first partial constraint Hamiltonian is defined by ${\hat{H}}_{C}^{hyb} = {\sum }_{i = 1}^{{n}_{C}} {\hat{C}}_{i} ,$ Equation 14 and contains only the *n_{C}* explicitly enforced constraint terms (i.e., only the summand constraint Hamiltonians from the first subset of summand constraint Hamiltonians). The problem Hamiltonian *Ĥ*_{P} encoding the computational problem in single-body terms is invariant with respect to the use of the original, the fully implicit or the hybrid protocol. (However, in contrast to the fully implicit implementation, in the hybrid protocol we can no longer associate the different driver terms with operations on the original problem spins.)

Note that the fully implicit and the fully explicit approach correspond to the limiting cases of the hybrid approach with *n_{C}* = 0 and ${n}_{C} = {n}_{C}^{tot}$, respectively.

The hybrid QAOA-protocol is analogous to Equation 4, with replacements ${\hat{H}}_{X} ↦ {\hat{H}}_{X}^{hyb}$ and ${\hat{H}}_{C} ↦ {\hat{H}}_{C}^{hyb}$ and now reads $\left|ψ\right〉 = {\prod }_{j = 1}^{p} {e}^{- {iβ}_{j} {\hat{H}}_{X}^{hyb}} {e}^{- {iγ}_{j} {\hat{H}}_{P}} {e}^{- {iΩ}_{j} {\hat{H}}_{C}^{hyb}} \left|{ψ}_{0}\right〉 .$ Equation 15 The initial quantum state |*ψ*₀〉 can be chosen to be the equal superposition of all computational basis states in 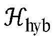 (cf. Sec. 4).

In the following, we illustrate the strength of this new flexibility on the example of the complete graph and then show how this can be applied to arbitrary graphs.

### 3.1 Example: Complete graph

Let us again consider a layout as shown in Figs. 7a)-c) which implements a problem graph with all-to-all connectivity (complete graph). If a single qubit is flipped, at least one constraint term will be violated. If we keep flipping more qubits until all constraint terms are fulfilled again, the minimal set of flipped qubits will correspond to a constraint-preserving driver line as in Fig. 7b). Fig. 7c) illustrates the hybrid approach. Only the row of 3-body constraint terms (shows as triangles with hatching) at the bottom of the lattice is enforced explicitly, while the others (squares without hatching) are enforced implicitly due to the restriction of dynamics via the hybrid driver Hamiltonian. If we enforce all three-body constraint terms explicitly as depicted in Fig. 7c), these three-body constraint terms do not need to be preserved by the driver terms anymore. Hence, we can find a valid set of hybrid driver lines, which contains shorter driver lines conserving only the implicitly enforced four-body constraints.

Alternatively, we can also understand this construction in the following way: in the hybrid setting, the original driver lines of Fig. 7b) can still be used as hybrid driver lines, even though the bottom constraint terms are explicitly enforced. However, as the bottom constraint terms no longer restrict the form of the driver Hamiltonian, we are allowed to add one more hybrid driver line for each explicitly enforced constraint term. The additionally allowed states violate the corresponding constraint term. Therefore, the only hybrid driver line we can add while keeping the existing driver lines independent, is one flipping the corresponding constraint value and conserving all others. An example for such a hybrid driver line is a part of an original driver line, ending at the corresponding constraint term. The full driver line combined with the newly added, partial driver line would be a suitable choice, but we want to avoid long driver lines in order to keep the circuit depths low. Replacing each long driver line with the symmetric difference of itself and the corresponding partial driver line results in two shorter driver lines, depicted in Fig. 7c), effectively 'breaking' each long driver line into two. It is easy to check that for a valid set of hybrid driver lines D, replacing a driver line *Q^{µ}* by the symmetric difference of itself with another line *Q^{v}* produces another valid set D'. Note that for the associated driver terms this replacement results in *X̂*^{(*µ*)} ↦ *X̂*^{(*µ*)}*X̂*^{(*v*)}, as the symmetric difference of two driver lines corresponds to the product of their associated driver terms. We thus arrive at a hybrid driver Hamiltonian ${\hat{H}}_{X}^{hyb} = {{{\sum }_{μ = 1}^{N - 1} {\hat{X}}_{A}^{\left(μ\right)}}_{︸}}_{group A} + {{{\sum }_{μ = 1}^{N - 2} {\hat{X}}_{B}^{\left(μ\right)}}_{︸}}_{group B} ,$ Equation 16 with driver terms ${\hat{X}}_{A}^{\left(μ\right)} = {\prod }_{ν = 0}^{μ - 1} {\hat{σ}}_{X}^{\left(νμ\right)} , {\hat{X}}_{B}^{\left(μ\right)} = {\prod }_{ν = μ + 1}^{N - 1} {\hat{σ}}_{x}^{\left(μν\right)} .$ Equation 17 This corresponds to splitting the product in Equation 10 in two separate terms. We can parallelize the implementation of the above hybrid driver Hamiltonian by classifying the terms into groups A and B as in Equation 16. All terms in group A correspond to the hybrid drives lines depicted as solid lines in Fig. 7c), while group B corresponds to the hybrid driver lines drawn as dashed lines. As none of the hybrid driver lines within a group overlap, their corresponding gate sequences can be executed at the same time. Hence, the implementation of a unitary driver operator of the form $exp \left(-iβ{\hat{H}}_{X}^{hyb}\right)$ takes a circuit depth of at most 2*N*. This can be further reduced to a constant depth by modularization of the layout, as explained in section 3.3.

### 3.2 Arbitrary (hyper-)graphs

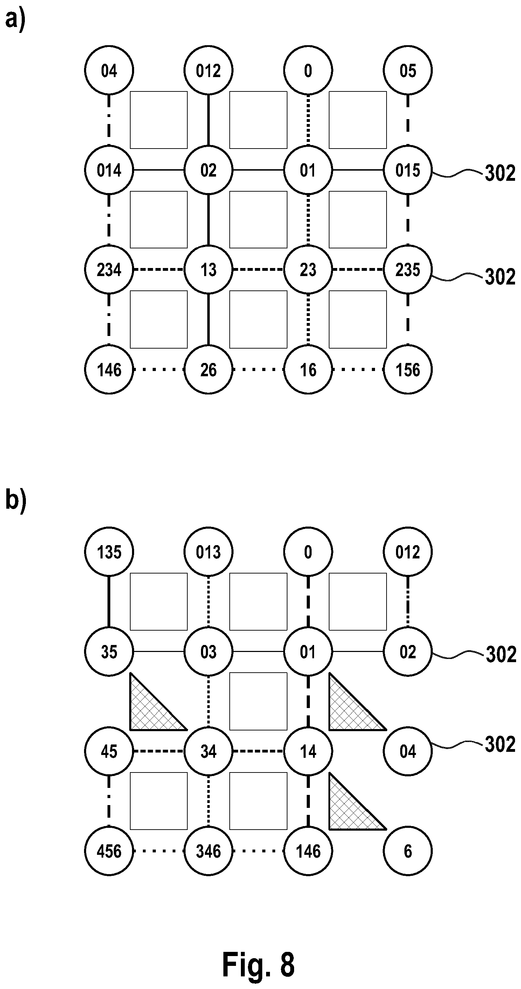

Figs. 8a)-b) show examples of arrangements of the constraint terms with partitioning into three- and four-body constraints. The computational problem may be an energy minimization of the general form as shown in Equation 1, involving k-body interactions for some arbitrary k. Each interaction term in Equation 1 is mapped to a parity qubit. In Figs. 8a)-b), the parity qubits are labeled by tuples of the form 04, 135, and the like. Therein, the parity qubit 04 corresponds, under the parity mapping, to a 2-body interaction between two classical spins *s*₀ and *s*₄; the parity qubit 135 corresponds to a 3-body interaction between three classical spins *s*₁, *s*₃ and *s*₅; and so on. Fig. 8a) illustrates the special case with only four-body constraint terms, for which the driver lines may be chosen to be strictly horizontal or vertical and can be parallelized trivially. Fig. 8b) illustrates the general case with both three- and four-body constraint terms. Implementing all three-body constraint terms explicitly still allows for parallel execution of all horizontal (vertical) lines. The shown driver lines conserve all four-body constraint terms (squares without hatching), while three-body constraint terms are explicitly enforced in Ĥ_{C} (triangles with hatching). The driver line in the top row of parity qubits has been omitted as it can be obtained via symmetric difference of the others. Qubits not involved in any of the shown driver lines are part of a single-qubit driver (not depicted)

Compiling general graphs (or hypergraphs) to the parity architecture can lead to a variety of placements of three- and four-body constraints. In the case of only four-body constraint terms, we can construct a hybrid driver Hamiltonian which conserves all constraint terms from only horizontal and vertical straight lines, as can be seen in Fig. 8a). This is still true for layouts with mixed three- and four-body constraints where all three-body constraints are enforced explicitly (see Fig. 8b)). However, isolated groups of three-body constraint terms which are not connected to the boundary of the layout by adjacent explicitly enforced constraint terms can complicate the implementation of the driver lines. This can be circumvented by enforcing additional constraint terms explicitly until all explicitly enforced constraint terms are connected to the boundary, directly or indirectly via other explicitly enforced constraint terms. A possible strategy to partition the constraint terms is as follows: All three-body constraint terms, and all four-body constraint terms needed to connect them to the boundary, are enforced explicitly, while the remaining four-body constraint terms are enforced implicitly by the drivers. The driver circuit can then be implemented in two steps, where all horizontal and all vertical driver lines are implemented in parallel, respectively.

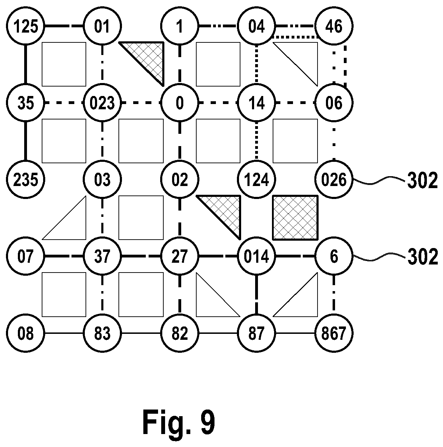

With additional optimization, it is possible to further reduce the number of explicitly enforced constraint terms: Some of the three-body constraint terms are automatically conserved by the above mentioned horizontal and vertical driver lines. In other cases, a small adjustment to the hybrid driver lines (for example adding a small set of additional qubits) can suffice to conserve even more three-body constraint terms. An example of such an optimization can be seen in Fig. 9.

Fig. 9 shows an example of an optimized set of explicitly enforced constraint terms (hatched shapes) such that hybrid driver lines which preserve the remaining constraint terms (no hatching) can be implemented with a parallelizable quantum circuit of reasonable depth. Triangles without hatching show three-body constraint terms which can be implemented implicitly without resulting in a significant increase of the required circuit depth. The hatched square is a four-body constraint term which is kept explicitly enforced to connect the adjacent explicitly enforced three-body constraint term to the boundary, simplifying the driver lines.

A more detailed discussion on how to choose which constraint terms should be enforced explicitly or implicitly and to find a valid set of hybrid driver lines is given in Appendix B.

### 3.3 Modularization

With the procedure described in the previous section and in Appendix B, the average length of hybrid driver lines (and therefore the depth of the QAOA-circuit) may grow linearly with the device dimensions, i.e. with the number of qubits in the quantum system. We now utilize the concept of implicitly and explicitly enforced constraints to impose an upper bound for the length of the hybrid driver lines and thereby restrict the driver circuit depth to an adjustable constant, while avoiding the fully explicit approach.

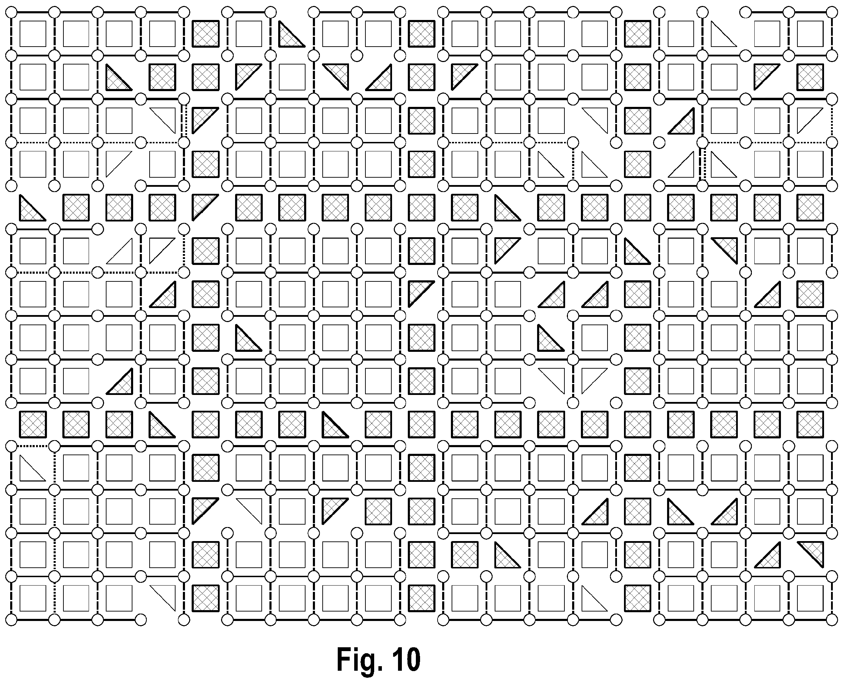

In order to restrict the length of the hybrid driver lines, we introduce additional (typically equidistant) rows and columns of explicitly enforced constraint terms with a maximum spacing *l*ₘₐₓ. In Fig. 10, an example of such rows and columns for *l*ₘₐₓ = 5 is depicted. Fig. 10 illustrates a modularization of a larger layout of qubits with additional explicitly enforced constraints (hatched squares and triangles) arranged in a grid.

We refer to a portion of the layout surrounded by explicitly enforced constraints as a *module,* also referred to herein as a "subsystem" of the quantum system. For example, in Fig. 10, the modules, or subsystems, are 5 x 5 arrays of qubits. The explicitly enforced constraint terms (hatched squares and triangles) define a boundary of each of the modules. Since hybrid driver lines never need to traverse a row or column of explicitly enforced constraint terms, each module can be treated separately when constructing hybrid driver lines.

Further, the length of the hybrid driver lines within a module is limited. In particular, if all three-body constraint terms in the module are enforced explicitly (i.e. there are only strictly vertical and horizontal lines), the length of a hybrid driver line can be at most *l*ₘₐₓ.

The quantum circuits implementing the unitary time evolutions of the respective driver terms for each module can be executed at the same time. Therefore, with this approach, the circuit depth of the driver Hamiltonian implementation scales linearly with *l*ₘₐₓ, which is a user-determined quantity and can be chosen according to current needs. Thus, the circuit depth of the driver Hamiltonian implementation is a constant, independent of the problem- and device size.

Even in the more general case of enforcing some of the three-body constraint terms within a module implicitly, the problem of finding appropriate hybrid driver lines now reduces to smaller, separate problems for each module and the lengths of the hybrid driver lines will still be approximately *l*ₘₐₓ.

Thus, in Fig. 10, all solid lines (extending horizontally) and all dashed lines (extending vertically) can be implemented in parallel, respectively. The dotted lines (which may have both horizontal and vertical parts), which are caused by implicitly enforced three-body constraints, only add a small contribution to the depth and are partially parallelizable with the other steps. In each submodule, the 'missing' driver line has been omitted as it can be obtained via symmetric difference of the others.

The implementations of *e*^{-*iγ*}*^{Ĥ}*^{_{P}} and ${e}^{- iΩ {\hat{H}}_{C}^{hyb}}$ are always of constant depth. This can be seen from the parallelization procedure of WO 2020/156680 A1. With further optimization of the gate sequence, the circuit depth for the constraint implementation can be shown to have an upper bound of 20. Together with the above findings, this ensures that a single cycle of the QAOA sequence according to Equation 15 for computational problems of arbitrary size can be implemented with constant-depth quantum circuits.

### 4 Initial state preparation

As an initial quantum state for the optimization procedure, we may use the ground state of the (negative of the) driver Hamiltonian, corresponding to the equal superposition of all computational states spanning the considered Hilbert space 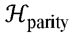 , 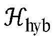 or 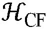 (fulfilling all implicitly enforced constraints), depending on whether the fully explicit, the hybrid or the fully implicit approach is used. While this can be easily achieved in the purely explicit approach by preparing each physical qubit in the equal superposition of the computational basis states, the initial state preparation is more challenging for the implicit and especially the hybrid approach. Consider a general hybrid driver Hamiltonian ${\hat{H}}_{X}^{hyb}$ involving a valid set D of hybrid driver lines, also including the limiting cases of fully implicit and explicit parity QAOA. The quantum state we wish to create is then the simultaneous eigenstate (with eigenvalue +1) of all driver terms in ${\hat{H}}_{X}^{hyb}$ and all constraint terms in ${\hat{H}}_{C}^{hyb}$. Since the quantum state in question is a stabilizer state, known methods for preparing stabilizer states can be used to construct a quantum circuit generating the stabilizer state in question from a product quantum state. The resulting circuits might result in large circuit depths on architectures with limited connectivity.

In the following, we propose a procedure to prepare the initial quantum state with a low circuit depth scaling linearly with the module size. We start by considering |*D*| = log₂dim( 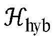 ) *driver qubits* to represent the states of the considered Hilbert space (satisfying all implicitly enforced constraints). This can be done by defining one qubit for every driver line, such that the associated driver term *X̂*^{(*µ*)} acts as the bit-flip operator for that driver qubit. In this picture, our desired initial state corresponds to all driver qubits being in the |+〉-state.

We want to define an operator *Z*^{(*µ*)} corresponding to the phase-flip operator on driver qubit *µ*. In order for this to be a valid construction, our newly defined operators must fulfill the (anti-)commutation relations $\left\{{\hat{X}}^{\left(μ\right)}, {\hat{Z}}^{\left(μ\right)}\right\} = \left[{\hat{X}}^{\left(μ\right)}, {\hat{Z}}^{\left(ν\right)}\right] = 0$ Equation 18 for *µ* ≠ v. For a single hybrid driver line *Q^{µ}*, it is easy to show that any operator ${\hat{σ}}_{z}^{\left(k\right)}$, acting on a qubit k ∈ *Q^{µ}* fulfills the desired commutation relations with the X-rotation on the same driver line. As long as this qubit is not involved in any other driver line (i.e. ∄*v* ≠ *µ*: *k* ∈ *Q^{v}*), this remains a valid choice. In the fully implicit implementation depicted in Fig. 7b, one can choose to do the Z-rotations on the qubits involving the index 0. With that choice, every Z-rotation commutes with all *X̂*-rotations apart from the one associated with hybrid driver line *Q^{µ}* which is the only one involving qubit k.

The goal is to prepare a state where every driver qubit *µ* is in the *X̂*^{(*µ*)}-eigenstate |+〉. We start from the easily preparable and constraint-fulfilling state | ↑〉^{⊗*K*} (in the space 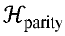 ), which corresponds to all driver qubits being in the state | ↑〉 as well. To prepare the desired state from this, we have to perform the operations on the quantum system 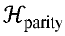 corresponding to a *π*/2-rotation around the y-axis on all driver qubits, which can be decomposed into consecutive rotations ${e}^{- i \frac{π}{4} {\hat{X}}^{\left(μ\right)}}$ and ${e}^{- i \frac{π}{4} {\hat{Z}}^{\left(μ\right)}}$, and thus implemented with the previously defined operators.

However, problems arise when a qubit is involved in multiple driver lines. Implementing a physical *σ̂_{z}*-operation on such a qubit has an effect on all involved driver lines and thus can introduce unwanted cross-talk which needs to be avoided. Whenever possible, we must therefore choose a qubit which is not involved in any other driver lines, to perform the phase operation on. This is possible for the fully implicit case, as shown in Fig. 7b, where the qubits including the index 0 are only involved in a single driver line each.

If this is not possible, the *Ẑ*^{(*µ*)}-operation on a qubit *k* for a driver line *Q^{µ}* ∋ *k* can still be performed as long as all driver qubits associated with other driver lines *Q^{v}* involving qubit k are in an eigenstate of *Ẑ*^{(*v*)} and thus not affected by the rotation. In the initially prepared state | ↑〉^{⊗*K*}, all driver qubits are in the Z-eigenstate. That enables us to find a sequence of driver rotations such that for every *Ẑ*^{(*µ*)}-rotation there is at least one qubit of the corresponding driver line which is either not included in any other driver lines, or only involved in driver lines whose state has not been rotated yet.

This procedure allows to prepare the desired superposition state even for more general hybrid driver Hamiltonians. The circuit depth for state preparation scales similar to the implementation of the unitary for the time-evolution under a single driver Hamiltonian. Exact instructions for arbitrary layouts are provided in Appendix C.

### 5 Numerical Results

### 5.1 Quantum circuit depth scaling

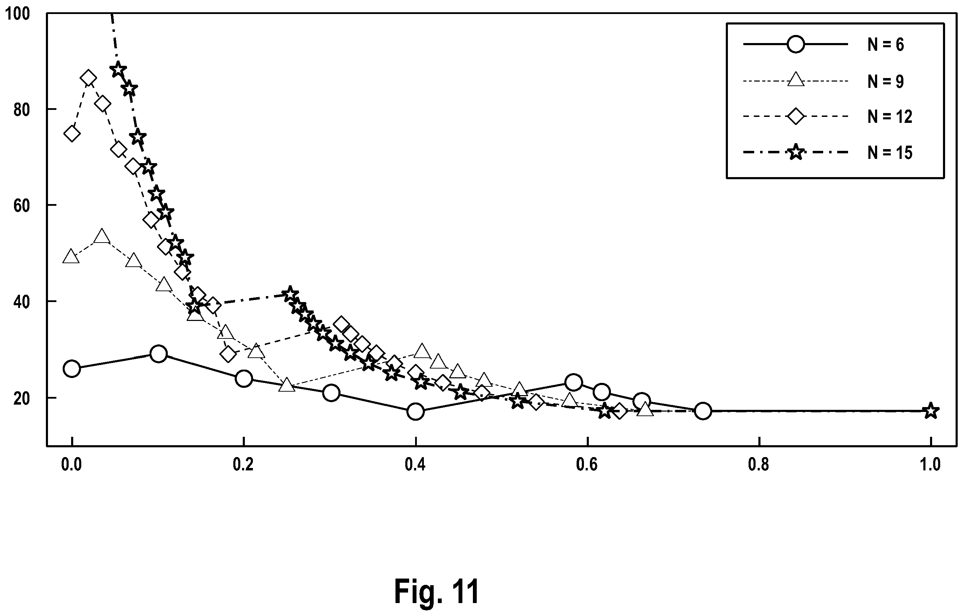

Fig. 11 shows the required quantum circuit depth (vertical axis) to implement a single step of the QAOA protocol for a layout as shown in Fig. 7. The horizontal axis represents the relative amount of explicit constraint terms. Said amount can be varied by considering different partitions of the constraint terms into explicit and implicit implementations (i.e. different partitions of the set of summand constraint Hamiltonians into a first subset and a second subset as described herein). The left side corresponds to a fully implicit implementation. With an increasing amount of explicitly enforced constraint terms, at first the enforcement of three-body constraint terms is made explicit one-by-one, until at the points marked by the crosses all three-body constraint terms are enforced explicitly. Then, additional lattices of explicitly enforced constraint terms for modularization are introduced and the lattice spacing is decreased step by step.

Starting with the relative amount of explicitly enforced constraint terms ${n}_{C} / {n}_{C}^{tot} = 0$, the circuit depth grows linearly with the system size. The large coefficient in the circuit depth scaling is due to the excessive overlapping of driver lines in the fully implicit setup (Fig. 7b) which renders a parallel implementation impossible. The circuit depth can be reduced by increasing the number of explicitly enforced three-body constraints, until at the points marked by crosses in the plot, all three-body constraint terms are explicitly enforced. The circuit depth now still scales linearly with the system size, but with a much smaller prefactor. Further improvement is possible through modularization of the layout. This leads to a small increase of the circuit depth by a constant number due to the additional implementation cost of the constraint Hamiltonian. The depth increase is independent of the system size as all explicitly enforced constraints of the modularization grid can be implemented in parallel. However, it is now possible to further reduce the circuit depth required for the driver terms. For sufficiently large lattices, the relation between reachable circuit depth and relative amount of explicitly enforced constraints becomes independent of the system size.

### 5.2 QAOA performance for different protocols

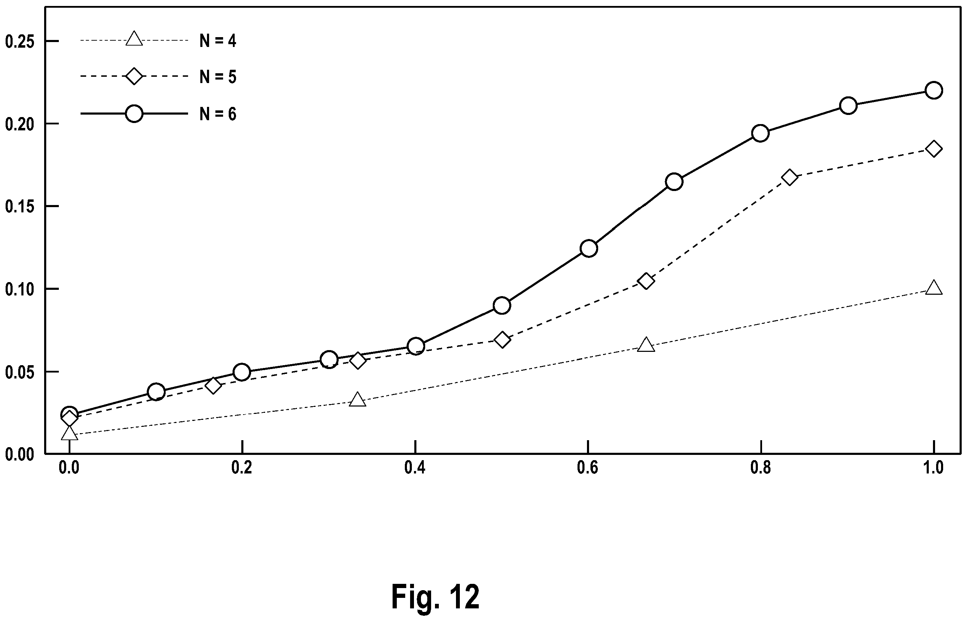

In order to demonstrate the advantages of this new approach, we compare the performance of the fully implicit, the hybrid and the fully explicit QAOA-approach in the parity scheme. The QAOA-parameters ranging in [0,2*π*) for *p* = 3 QAOA-cycles are randomly initialized *n*ᵣₑₚₛ = 100 times. Note that for the fully implicit approach there is one QAOA-parameter less per cycle as the constraint part has been removed. For each initialization we use the following classical procedure to find a local optimum: We perform an update of a random QAOA-parameter. If the energy of the system decreases after a parameter update, the new parameters are accepted with probability *p*_{accept} = 1 and otherwise with a probability exponentially decreasing with the energy increase caused by the new parameters. This procedure is repeated until the objective value converges. Out of the ***n***ᵣₑₚₛ initializations the lowest energy expectation value E = 〈*ψ*|*Ĥ*_{phys}|*ψ*〉 [cf. Equation 4] for the respective instance is kept. We calculate the residual energy *E*ᵣₑₛ of the system state, defined as ${E}_{res} = \frac{E - {E}_{min}}{{E}_{max} - {E}_{min}}$ Equation 19 after the optimization, as a function of the number of explicitly enforced constraints. In Equation 19, *E*ₘₐₓ and *E*ₘᵢₙ denote the highest and lowest energy in the configuration space, respectively. The described procedure is applied for complete graphs with N ∈ {4,5,6} problem spins. The results are shown in Fig. 12. Fig. 12 illustrates the mean residual energy after optimization (vertical axis) versus the relative amount of explicitly enforced constraint terms (horizontal axis) for different system sizes. Each data point represents the average of 96 random realizations of the described procedure. N denotes the number of spin variables involved in the respective problem. The error bars represent the standard deviation for the problem instances.

Clearly, the residual energy increases with increasing number of explicitly enforced constraints, which is related to the fact that also the size of the feasible subspace increases with the number of explicitly enforced constraints. Note that the simulations discussed in this section do not consider effects of quantum noise such as bit-flip errors or decoherence.

### 6 Summary

In summary, we have shown how to improve the parity-QAOA performance by interpolating between the standard single-qubit driver Hamiltonian to a driver Hamiltonian tailored to the computational problem. This proposed hybrid approach keeps the parallelizability of the fully explicit parity-QAOA while gaining performance, by reducing the search space. Given a fixed hardware layout, the trade-off between circuit depth and the size of the search space can be dynamically changed by tuning the size of implicitly driven and explicitly inter-connected submodules.

The ideas presented here can be readily realized on any grid arrangement of the qubits. This is necessary to address questions about the practical QAOA performance using modularized layouts for large problem sizes inaccessible for classical simulations.

### Appendix A Decomposition of driver terms

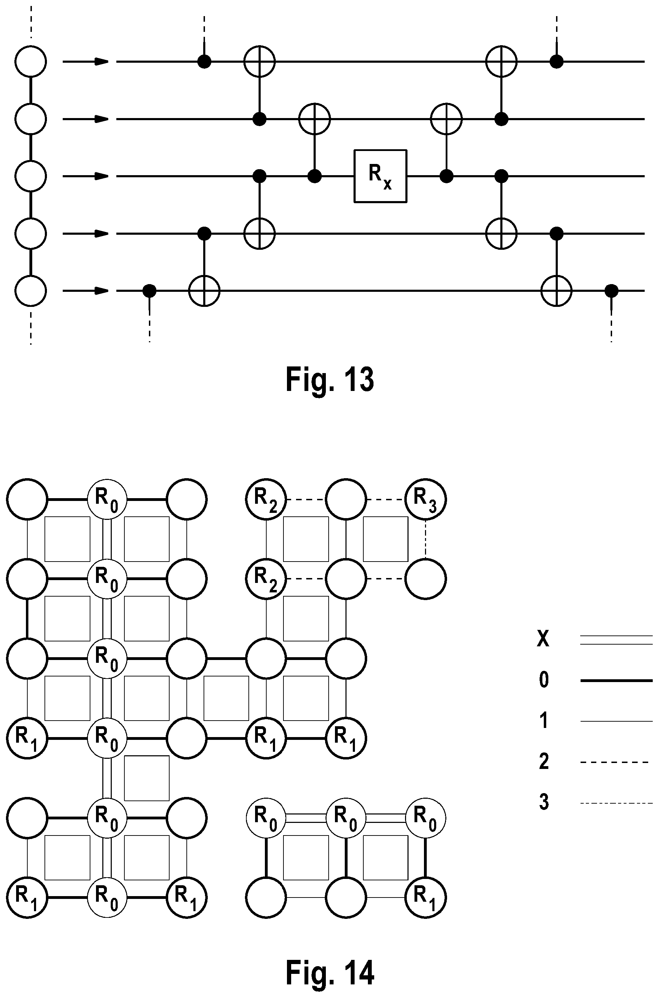

Fig. 13 shows a possible decomposition of the unitary operator *e^{-iβ}^{X̂}*^{(*µ*)} corresponding to the time evolution under a driver term (cf. Equation 7) into CNOT gates and *Rₓ*-rotation gates. Any driver line containing n connected qubits can be implemented with a circuit depth of at most *n* + 2. Note that there are many representations of this unitary operator as a circuit, i.e. the qubit used for the rotation can be freely chosen. This freedom can be used to minimize the circuit depth of a sequence of such operators.

### Appendix B Partitioning constraints and finding driver lines

In the following, we outline a general algorithm to find valid hybrid driver lines (we just call them lines in the following). Certain steps can be improved (solution is found faster, solution requires less explicitly enforced constraints or solution leads to smaller circuit depth) depending on how constraints/qubits/driver lines are picked, but any choice works in principle. Furthermore, the limitations for lines can follow different criteria, but they do not change the approach of the algorithm. Start with all constraints being implicitly enforced, apart from a grid of explicitly enforced constraints for modularization, as described in Sec. 3.3. Go through every module (connected set of implicitly enforced constraints, connected meaning connected through adjacency, diagonal/left/right/up/down):
- Go through every qubit inside the module (every qubit which is in a constraint term of that module)
   - if the qubit is not part of any horizontal line yet, create a horizontal line through that qubit: Keep adding qubits to one side of the line until the last-added qubit is in no new (not yet reached) implicitly enforced four-body constraints. Do this to both sides.
   - if there are remaining implicitly enforced constraints in the module which are not preserved by the line (i.e. which do not commute with the corresponding driver term), pick one of these constraints and: Extend the line by a qubit which is on the same plaquette (2 x 2 square) as the picked constraint and neighbors an existing line qubit, but is not part of the line yet. If no such qubit exists, go to "fail module".
   - repeat the above step (pick another non-preserved constraint and extend the line accordingly) until all implicitly enforced constraints are preserved by the line.
   - if the qubit is not part of a vertical line yet, do the same procedure with a vertical line
- From every set of connected lines (i.e. every line in such a set can be reached from every other line by moving along the lines and only switching between overlapping lines), remove the longest lines until the remaining lines are independent (in the sense that the symmetric difference of two or more lines does not create another line in the set)
- If any of the lines exceed preset limits, or no initial state preparation algorithm can be found (see next section), go to "fail module". Preset limits can include but are not limited to: the maximal line length, branching/bending of the lines (i.e. if and how they are allowed to deviate from literal straight lines), or resulting circuit depth.
- If the total number of independent lines is smaller than the number of lines required, go to "fail module". The number of lines required can be calculated from the number of implicitly enforced constraint terms *n*_{imp,mod} in the module and the number of qubits *K*_{mod} in the module as *K*_{mod} - *n*_{imp,mod}.
- "fail module": Enforce an additional constraint term in the module explicitly and start again for this module. The additional constraint term shall be a three-body constraint term (which contains a qubit of a line which lead to failure, if a single line can be identified for leading to failure) unless in the failing module, there is an explicitly enforced three-body constraint term which is not neighboring other explicitly enforced constraints (and that is the reason for the failing). In that case, make additional constraint terms (three- or four-body) explicitly enforced such that all explicitly enforced constraint terms are connected to the boundary (through neighboring explicitly enforced constraints). Note: It might require multiple constraint terms to connect to the boundary, there might be multiple ways to connect it.

At the latest, one will find a valid and acceptable (not exceeding the preset limits) set of driver lines once (a) all three-body constraint terms are explicitly enforced and connected to the boundary via explicitly enforced constraint terms and (b) the length limit is larger or equal to the maximal dimension of the modules (e.g. if the module contains 3 × 4 qubits, the maximal line length is 4). This is true even when not allowing branching or bending. If branching or bending is allowed, then one will find valid acceptable lines earlier.

### Appendix C Instructions for initial quantum state preparation

The following instructions are valid for fully implicit, fully explicit and the general hybrid driver lines, but only required in the truly hybrid case, as the other cases are trivial:
First, assign an implementation priority *P_{µ}* determining the implementation order to every driver line *Q^{µ}*, such that:
   - Driver lines with *P_{µ}* = 0 contain at least one qubit which is not part of any other driver line.
   - Every driver line *Q^{µ}* with priority *P_{µ}* > 0 contains at least one qubit which otherwise is only in lines *Q^{v}* with lower priority *Pᵥ < P_{µ}.*
Second, apply the rotation ${R}_{λ} = {e}^{- i \frac{π}{4} {\hat{Z}}^{\left(λ\right)}} {e}^{- i \frac{π}{4} {\hat{X}}^{\left(λ\right)}}$ Equation C1 for each driver qubit *λ* in descending order of their priorities *P_{λ}*. Equal priorities can be implemented in any order, their required gate sequences can be performed in parallel (or as parallel as possible, if there are qubit overlaps of the driver lines). The priorities of the lines can be found iteratively, we call every line "unassigned" until it has been assigned a priority:
   1. Assign all lines which contain at least one qubit which is not in any other lines the priority *P_{µ}* = 0.
   2. Assign all lines *Q^{v}* which overlap at least one line with priority *P_{µ}* (and do not overlap other, unassigned lines at the same qubit) the priority *Pᵥ = P_{µ} +* 1
   3. Repeat step 2 until all lines have a priority.

The initial state |*Ψ*₀〉 can then be prepared as $\left|{ψ}_{0}\right〉 = {\prod }_{κ = 0}^{{P}_{max}} {\prod }_{{Q}^{μ} ∈ {D}_{κ}} {e}^{i \frac{π}{4} {\hat{Z}}^{\left(μ\right)}} {e}^{- i \frac{π}{4} {\hat{X}}^{\left(μ\right)}} {\left|↑\right〉}^{⊗ K} ,$ Equation C2 where *P*ₘₐₓ is the highest assigned priority and *D_{κ}* ⊆ *D* is the subset of driver lines with priority *κ*. Note that the order of the products must be such that the terms with higher priority are applied first.

If with this procedure, not all lines can be assigned a priority, update the explicit/implicit grouping of the constraints according to Appendix B and try again. At the latest, it will work when all three-body constraints are explicitly enforced. Fig. 14 shows an example of two sets of connected driver lines in a sub-module with assigned priorities. In Fig. 14, only implicitly enforced constraints are shown. X: Left-out line which is not in driver Hamiltonian. 0-3: Priorities P_{µ} of the lines to perform the rotations on (starting with P_{µ} = 3). The rotations for lines with priority P_{µ} can be performed on the qubits marked with R_{µ}.

While the foregoing is directed to embodiments, other and further embodiments may be devised without departing from the scope determined by the claims.

## Claims

1. A method of performing a quantum computation, comprising:
providing a quantum system (300) comprising constituents (302);
encoding, by a classical computing system (550), a computational problem (110) into a problem Hamiltonian (150) of the quantum system, wherein the problem Hamiltonian is a single-body Hamiltonian being a sum of summand problem Hamiltonians (152);
determining, by the classical computing system, a constraint Hamiltonian (250) of the quantum system, the constraint Hamiltonian being a sum of summand constraint Hamiltonians (252), wherein a ground state of a total Hamiltonian encodes a solution to the computational problem, wherein the total Hamiltonian includes a sum of the problem Hamiltonian and the constraint Hamiltonian;
determining, by the classical computing system, a first subset (S₁) of the summand constraint Hamiltonians of the constraint Hamiltonian and a second subset (S₂) of the summand constraint Hamiltonians of the constraint Hamiltonian;
performing N rounds of operations, wherein N ≥ 2, wherein each round comprises:
preparing an initial quantum state;
evolving the quantum system according to a sequence of unitary operators, the sequence including problem-encoding unitary operators, constraint-enforcing unitary operators and unitary driver operators,
wherein each problem-encoding unitary operator is a unitary time evolution operator of a summand problem Hamiltonian of the problem Hamiltonian or is a unitary time evolution operator of a sum of summand problem Hamiltonians of the problem Hamiltonian,
wherein each constraint-enforcing unitary operator is a unitary time evolution operator of a summand constraint Hamiltonian taken from the first subset of the summand constraint Hamiltonians of the constraint Hamiltonian, or is a unitary time evolution operator of a sum of summand constraint Hamiltonians taken from said first subset, and
wherein each unitary driver operator is a unitary operator that commutes with every summand constraint Hamiltonian from the second subset of the summand constraint Hamiltonians of the constraint Hamiltonian; and
performing a measurement of one or more constituents of the quantum system; and
outputting, by the classical computing system, a result (590) of the quantum computation.

2. The method of claim 1, wherein, for each of the N rounds of operations, evolving the quantum system according to the sequence of unitary operators of the round comprises implementing at least some unitary operators of the sequence by a quantum circuit comprising quantum gates.

3. The method of claim 1 or 2, wherein the quantum system includes subsystems (450) each comprising a subset of the constituents, wherein the subsystems are disjoint, wherein each subsystem has boundary constituents (420) forming part of a boundary between the subsystem and one or more adjacent subsystems, wherein each boundary constituent participates in a quantum interaction represented by a summand constraint Hamiltonian of the first subset of the summand constraint Hamiltonians of the constraint Hamiltonian.

4. The method of claim 3, wherein each unitary driver operator acts fully inside one of the subsystems of the quantum system.

5. The method of claim 3 or 4, wherein each subsystem has a total number of constituents that is independent of a size of the computational problem.

6. The method of any of claims 3 to 5, wherein each unitary driver operator is realized by a quantum circuit of constant depth.

7. The method of any of the preceding claims, wherein the initial quantum state of at least some of the N rounds is a ground state of a partial constraint Hamiltonian being a sum of all summand constraint Hamiltonians taken from the second subset of the summand constraint Hamiltonians.

8. The method of any of the preceding claims, further comprising:
determining a driver Hamiltonian being a sum of summand driver Hamiltonians, wherein the driver Hamiltonian commutes with every summand constraint Hamiltonian of the second subset of the summand constraint Hamiltonians, wherein each unitary driver operator is a unitary time evolution operator of a summand driver Hamiltonian of the driver Hamiltonian or is a unitary time evolution operator of a sum of two or more summand driver Hamiltonians of the driver Hamiltonian.

9. The method of any of the preceding claims, wherein the sequence of unitary operators of at least some of the N rounds of operations has the form A₁ A₂ ... Aₚ, or includes at least a sub-sequence of said form, wherein p ≥ 3, wherein each Aᵢ is a product of the form Xᵢ Yᵢ Zᵢ, wherein one of Xᵢ, Yᵢ and Zᵢ is a problem-encoding unitary operator, another one of Xᵢ, Yᵢ and Zᵢ is constraint-enforcing unitary operator and yet another one of Xᵢ, Yᵢ and Zᵢ is a unitary driver operator.

10. The method of any of the preceding claims, wherein the N rounds of operations include one or more adaptive rounds of operations, wherein, for each adaptive round of operations, the unitary operators of the sequence of unitary operators of the adaptive round are determined based on at least one measurement outcome of a measurement performed in a previous round of the N rounds of operations.

11. The method of any of the preceding claims, wherein the N rounds of operations include a first round of operations, wherein evolving the quantum system according to the sequence of unitary operators of the first round of operations results in a first quantum state of the quantum system, wherein performing the measurement in the first round comprises:
measuring an energy of the first quantum state.

12. The method of claim 11, wherein the N rounds of operations include a second round of operations performed after the first round of operations, wherein evolving the quantum system according to the sequence of unitary operators of the second round of operations results in a second quantum state of the quantum system, wherein performing the measurement in the second round comprises:
measuring an energy of the second quantum state;
wherein the method comprises:
comparing the energy of the first quantum state with the energy of the second quantum state; and
determining the sequence of unitary operators to be applied in a third round of the N rounds of operations, wherein the third round is to be performed after the second round, wherein the sequence of unitary operators to be applied in the third round is determined based at least on the comparison of the energy of the first quantum state with the energy of the second quantum state.

13. The method of any of the preceding claims, wherein:
the problem Hamiltonian has the form ${\hat{H}}_{P} = {\sum }_{k} {J}_{k} {\hat{σ}}_{z}^{\left(k\right)}$, wherein ${\hat{σ}}_{z}^{\left(k\right)}$ is a Pauli operator of a k-th constituent of the quantum system, wherein each Jₖ is a coefficient, and wherein each term ${J}_{k} {\hat{σ}}_{z}^{\left(k\right)}$ is a summand problem Hamiltonian; and/or
the constraint Hamiltonian has the form *Ĥ*_{C} = Σ*ₗĈₗ,* wherein each *Ĉₗ* has the form *Ĉₗ* = *aₗ Ẑₗ + bₗI,* wherein *Ẑₗ* is a tensor product of Pauli σ_{z} operators, I is the identity operator, and aₗ and bₗ are coefficients, and wherein each *Cₗ* is a summand constraint Hamiltonian.

14. The method of any of the preceding claims, wherein each unitary driver operator has the form exp(it*Ĥ*), wherein t is a coefficient and *Ĥ* is an operator of the form ${\sum }_{j}^{{b}_{j}} {\hat{X}}_{j}$, wherein each bⱼ is a coefficient and each *X̂*ⱼ is a tensor product of Pauli σ_{X} operators or a single Pauli σ_{X} operator, wherein the notation Σⱼ denotes a sum of two or more terms or a single term.

15. An apparatus (500) for performing a quantum computation, comprising:
a quantum system (300) comprising constituents (302);
a classical computing system (550) configured to:
encode a computational problem (110) into a problem Hamiltonian (150) of the quantum system, wherein the problem Hamiltonian is a single-body Hamiltonian being a sum of summand problem Hamiltonians (152);
determine a constraint Hamiltonian (250) of the quantum system, the constraint Hamiltonian being a sum of summand constraint Hamiltonians (252), wherein a ground state of a total Hamiltonian encodes a solution to the computational problem, wherein the total Hamiltonian includes a sum of the problem Hamiltonian and the constraint Hamiltonian; and
determine a first subset (S₁) of the summand constraint Hamiltonians of the constraint Hamiltonian and a second subset (S₂) of the summand constraint Hamiltonians of the constraint Hamiltonian;
a quantum processing system comprising a unitary evolution device (530) and a measurement device (540), the quantum processing system being configured to perform N rounds of operations, wherein N ≥ 2, wherein each round comprises:
evolving, by the unitary evolution device, the quantum system according to a sequence of unitary operators, the sequence including problem-encoding unitary operators, constraint-enforcing unitary operators and unitary driver operators,
wherein each problem-encoding unitary operator is a unitary time evolution operator of a summand problem Hamiltonian of the problem Hamiltonian or is a unitary time evolution operator of a sum of summand problem Hamiltonians of the problem Hamiltonian,
wherein each constraint-enforcing unitary operator is a unitary time evolution operator of a summand constraint Hamiltonian taken from the first subset of the summand constraint Hamiltonians of the constraint Hamiltonian, or is a unitary time evolution operator of a sum of summand constraint Hamiltonians taken from said first subset, and
wherein each unitary driver operator is a unitary operator that commutes with every summand constraint Hamiltonian from the second subset of the summand constraint Hamiltonians of the constraint Hamiltonian; and
performing, by the measurement device, a measurement of one or more constituents of the quantum system,
the classical computing system being further configured to output a result (590) of the quantum computation.

## Patentansprüche

1. Verfahren zur Durchführung einer Quantenberechnung, umfassend:
Bereitstellen eines Quantensystems (300), das Bestandteile (302) umfasst;
Codieren, durch ein klassisches Rechensystem (550), eines Berechnungsproblems (110) in einen Problem-Hamiltonian (150) des Quantensystems, wobei der Problem-Hamiltonian ein Ein-Körper-Hamiltonian ist, der eine Summe von Summand-Problem-Hamiltonians (152) ist;
Bestimmen, durch das klassische Rechensystem, eines Nebenbedingungs-Hamiltonians (250) des Quantensystems, wobei der Nebenbedingungs-Hamiltonian eine Summe von Summand-Nebenbedingungs-Hamiltonians (252) ist, wobei ein Grundzustand eines Gesamt-Hamiltonians eine Lösung für das Berechnungsproblem codiert, wobei der Gesamt-Hamiltonian eine Summe aus dem Problem-Hamiltonian und dem Nebenbedingungs-Hamiltonian umfasst;
Bestimmen, durch das klassische Rechensystem, einer ersten Teilmenge (S₁) der Summand-Nebenbedingungs-Hamiltonians des Nebenbedingungs-Hamiltonians und einer zweiten Teilmenge (S₂) der Summand-Nebenbedingungs-Hamiltonians des Nebenbedingungs-Hamiltonians;
Durchführen von N Operationsrunden, wobei N ≥ 2, wobei jede Runde umfasst:
Präparieren eines anfänglichen Quantenzustands;
Entwickeln des Quantensystems gemäß einer Sequenz von unitären Operatoren, wobei die Sequenz problemcodierende unitäre Operatoren, nebenbedingungserzwingende unitäre Operatoren und unitäre Treiberoperatoren umfasst,
wobei jeder problemcodierende unitäre Operator ein unitärer Zeitentwicklungsoperator eines Summand-Problem-Hamiltonians des Problem-Hamiltonians ist oder ein unitärer Zeitentwicklungsoperator einer Summe von Summand-Problem-Hamiltonians des Problem-Hamiltonians ist,
wobei jeder nebenbedingungserzwingende unitäre Operator ein unitärer Zeitentwicklungsoperator eines Summand-Nebenbedingungs-Hamiltonians ist, der aus der ersten Teilmenge der Summand-Nebenbedingungs-Hamiltonians des Nebenbedingungs-Hamiltonians entnommen ist, oder ein unitärer Zeitentwicklungsoperator einer Summe von Summand-Nebenbedingungs-Hamiltonians ist, die aus der besagten ersten Teilmenge entnommen sind, und
wobei jeder unitäre Treiberoperator ein unitärer Operator ist, der mit jedem Summand-Nebenbedingungs-Hamiltonian aus der zweiten Teilmenge der Summand-Nebenbedingungs-Hamiltonians des Nebenbedingungs-Hamiltonians kommutiert; und
Durchführen einer Messung eines oder mehrerer Bestandteile des Quantensystems; und Ausgeben, durch das klassische Rechensystem, eines Ergebnisses (590) der Quantenberechnung.

2. Verfahren nach Anspruch 1, wobei, für jede der N Operationsrunden, das Entwickeln des Quantensystems gemäß der Sequenz von unitären Operatoren der Runde das Implementieren zumindest einiger unitärer Operatoren der Sequenz durch einen Quantenschaltkreis umfasst, der Quantengatter umfasst.

3. Verfahren nach Anspruch 1 oder 2, wobei das Quantensystem Teilsysteme (450) umfasst, die jeweils eine Teilmenge der Bestandteile umfassen, wobei die Teilsysteme disjunkt sind, wobei jedes Teilsystem Randbestandteile (420) aufweist, die Teil einer Grenze zwischen dem Teilsystem und einem oder mehreren benachbarten Teilsystemen bilden, wobei jeder Randbestandteil an einer Quantenwechselwirkung teilnimmt, die durch einen Summand-Nebenbedingungs-Hamiltonian der ersten Teilmenge der Summand-Nebenbedingungs-Hamiltonians des Nebenbedingungs-Hamiltonians dargestellt wird.

4. Verfahren nach Anspruch 3, wobei jeder unitäre Treiberoperator vollständig innerhalb eines der Teilsysteme des Quantensystems wirkt.

5. Verfahren nach Anspruch 3 oder 4, wobei jedes Teilsystem eine Gesamtzahl an Bestandteilen aufweist, die unabhängig von einer Größe des Berechnungsproblems ist.

6. Verfahren nach einem der Ansprüche 3 bis 5, wobei jeder unitäre Treiberoperator durch einen Quantenschaltkreis konstanter Tiefe realisiert wird.

7. Verfahren nach einem der vorhergehenden Ansprüche, wobei der anfängliche Quantenzustand von zumindest einigen der N Runden ein Grundzustand eines partiellen Nebenbedingungs-Hamiltonians ist, der eine Summe aller Summand-Nebenbedingungs-Hamiltonians ist, die aus der zweiten Teilmenge der Summand-Nebenbedingungs-Hamiltonians entnommen sind.

8. Verfahren nach einem der vorhergehenden Ansprüche, ferner umfassend:
Bestimmen eines Treiber-Hamiltonians, der eine Summe von Summand-Treiber-Hamiltonians ist, wobei der Treiber-Hamiltonian mit jedem Summand-Nebenbedingungs-Hamiltonian der zweiten Teilmenge der Summand-Nebenbedingungs-Hamiltonians kommutiert, wobei jeder unitäre Treiberoperator ein unitärer Zeitentwicklungsoperator eines Summand-Treiber-Hamiltonians des Treiber-Hamiltonians ist oder ein unitärer Zeitentwicklungsoperator einer Summe von zwei oder mehr Summand-Treiber-Hamiltonians des Treiber-Hamiltonians ist.

9. Verfahren nach einem der vorhergehenden Ansprüche, wobei die Sequenz von unitären Operatoren von zumindest einigen der N Operationsrunden die Form A₁ A₂ ... Aₚ aufweist, oder zumindest eine Teilsequenz dieser Form aufweist, wobei p ≥ 3, wobei jedes Aᵢ ein Produkt der Form Xᵢ Yᵢ Zᵢ ist, wobei eines von Xᵢ, Yᵢ und Zᵢ ein problemcodierender unitärer Operator ist, ein anderes von Xᵢ, Yᵢ und Zᵢ ein nebenbedingungserzwingender unitärer Operator ist und noch ein anderes von Xᵢ, Yᵢ und Zᵢ ein unitärer Treiberoperator ist.

10. Verfahren nach einem der vorhergehenden Ansprüche, wobei die N Operationsrunden eine oder mehrere adaptive Operationsrunden umfassen, wobei, für jede adaptive Operationsrunde, die unitären Operatoren der Sequenz von unitären Operatoren der adaptiven Runde basierend auf mindestens einem Messergebnis einer Messung bestimmt werden, die in einer vorherigen Runde der N Operationsrunden durchgeführt wurde.

11. Verfahren nach einem der vorhergehenden Ansprüche, wobei die N Operationsrunden eine erste Operationsrunde umfassen, wobei das Entwickeln des Quantensystems gemäß der Sequenz von unitären Operatoren der ersten Operationsrunde zu einem ersten Quantenzustand des Quantensystems führt, wobei das Durchführen der Messung in der ersten Runde umfasst:
Messen einer Energie des ersten Quantenzustands.

12. Verfahren nach Anspruch 11, wobei die N Operationsrunden eine zweite Operationsrunde umfassen, die nach der ersten Operationsrunde durchgeführt wird, wobei das Entwickeln des Quantensystems gemäß der Sequenz von unitären Operatoren der zweiten Operationsrunde zu einem zweiten Quantenzustand des Quantensystems führt, wobei das Durchführen der Messung in der zweiten Runde umfasst:
Messen einer Energie des zweiten Quantenzustands;
wobei das Verfahren umfasst:
Vergleichen der Energie des ersten Quantenzustands mit der Energie des zweiten Quantenzustands; und
Bestimmen der Sequenz von unitären Operatoren, die in einer dritten Runde der N Operationsrunden anzuwenden ist, wobei die dritte Runde nach der zweiten Runde durchzuführen ist, wobei die Sequenz von unitären Operatoren, die in der dritten Runde anzuwenden ist, basierend zumindest auf dem Vergleich der Energie des ersten Quantenzustands mit der Energie des zweiten Quantenzustands bestimmt wird.

13. Verfahren nach einem der vorhergehenden Ansprüche, wobei:
der Problem-Hamiltonian die Form ${\hat{H}}_{P} = {\sum }_{k} {J}_{k} {\hat{σ}}_{z}^{\left(k\right)}$ aufweist, wobei ${\hat{σ}}_{z}^{\left(k\right)}$ ein Pauli-Operator eines k-ten Bestandteils des Quantensystems ist, wobei jedes Jₖ ein Koeffizient ist, und wobei jeder Term ${J}_{k} {\hat{σ}}_{z}^{\left(k\right)}$ ein Summand-Problem-Hamiltonian ist; und/oder
der Nebenbedingungs-Hamiltonian die Form *Ĥ*_{C} = Σ*ₗ Ĉₗ* aufweist, wobei jedes *Ĉₗ* die Form *Ĉₗ = aₗ Ẑₗ + bₗI* aufweist, wobei *Ẑₗ* ein Tensorprodukt von Pauli-σ_{z} -Operatoren ist, I der Identitätsoperator ist, und a₁ und b₁ Koeffizienten sind, und wobei jedes *Ĉₗ* ein Summand-Nebenbedingungs-Hamiltonian ist.

14. Verfahren nach einem der vorhergehenden Ansprüche, wobei jeder unitäre Treiberoperator die Form exp(it*Ĥ*) aufweist, wobei t ein Koeffizient ist und *Ĥ* ein Operator der Form ${\sum }_{j}^{{b}_{j}} {\hat{X}}_{j}$ ist, wobei jedes bⱼ ein Koeffizient ist und jedes *X̂*ⱼ ein Tensorprodukt von Pauli-σ_{X} -Operatoren oder ein einzelner Pauli-σ_{X}-Operator ist, wobei die Notation Σⱼ eine Summe von zwei oder mehr Termen oder einen einzelnen Term bezeichnet.

15. Vorrichtung (500) zur Durchführung einer Quantenberechnung, umfassend:
ein Quantensystem (300), das Bestandteile (302) umfasst;
ein klassisches Rechensystem (550), das konfiguriert ist zum:
Codieren eines Berechnungsproblems (110) in einen Problem-Hamiltonian (150) des Quantensystems, wobei der Problem-Hamiltonian ein Ein-Körper-Hamiltonian ist, der eine Summe von Summand-Problem-Hamiltonians (152) ist;
Bestimmen eines Nebenbedingungs-Hamiltonians (250) des Quantensystems, wobei der Nebenbedingungs-Hamiltonian eine Summe von Summand-Nebenbedingungs-Hamiltonians (252) ist, wobei ein Grundzustand eines Gesamt-Hamiltonians eine Lösung für das Berechnungsproblem codiert, wobei der Gesamt-Hamiltonian eine Summe aus dem Problem-Hamiltonian und dem Nebenbedingungs-Hamiltonian umfasst; und
Bestimmen einer ersten Teilmenge (S₁) der Summand-Nebenbedingungs-Hamiltonians des Nebenbedingungs-Hamiltonians und einer zweiten Teilmenge (S₂) der Summand-Nebenbedingungs-Hamiltonians des Nebenbedingungs-Hamiltonians;
ein Quantenverarbeitungssystem, das eine Einrichtung zur unitären Entwicklung (530) und eine Messeinrichtung (540) umfasst, wobei das Quantenverarbeitungssystem konfiguriert ist, N Operationsrunden durchzuführen, wobei N ≥ 2, wobei jede Runde umfasst:
Entwickeln, durch die Einrichtung zur unitären Entwicklung, des Quantensystems gemäß einer Sequenz von unitären Operatoren, wobei die Sequenz problemcodierende unitäre Operatoren, nebenbedingungserzwingende unitäre Operatoren und unitäre Treiberoperatoren umfasst,
wobei jeder problemcodierende unitäre Operator ein unitärer Zeitentwicklungsoperator eines Summand-Problem-Hamiltonians des Problem-Hamiltonians ist oder ein unitärer Zeitentwicklungsoperator einer Summe von Summand-Problem-Hamiltonians des Problem-Hamiltonians ist,
wobei jeder nebenbedingungserzwingende unitäre Operator ein unitärer Zeitentwicklungsoperator eines Summand-Nebenbedingungs-Hamiltonians ist, der aus der ersten Teilmenge der Summand-Nebenbedingungs-Hamiltonians des Nebenbedingungs-Hamiltonians entnommen ist, oder ein unitärer Zeitentwicklungsoperator einer Summe von Summand-Nebenbedingungs-Hamiltonians ist, die aus der besagten ersten Teilmenge entnommen sind, und
wobei jeder unitäre Treiberoperator ein unitärer Operator ist, der mit jedem Summand-Nebenbedingungs-Hamiltonian aus der zweiten Teilmenge der Summand-Nebenbedingungs-Hamiltonians des Nebenbedingungs-Hamiltonians kommutiert; und
Durchführen, durch die Messeinrichtung, einer Messung eines oder mehrerer Bestandteile des Quantensystems,
wobei das klassische Rechensystem ferner konfiguriert ist, ein Ergebnis (590) der Quantenberechnung auszugeben.

## Revendications

1. Procédé de réalisation d'un calcul quantique, comprenant :
la fourniture d'un système quantique (300) comprenant des constituants (302) ;
le codage, par un système informatique classique (550), d'un problème de calcul (110) en un hamiltonien de problème (150) du système quantique, dans lequel l'hamiltonien de problème est un hamiltonien à un corps qui est une somme d'hamiltoniens de problème de terme de somme (152) ;
la détermination, par le système informatique classique, d'un hamiltonien de contrainte (250) du système quantique, l'hamiltonien de contrainte étant une somme d'hamiltoniens de contrainte de terme de somme (252), dans lequel un état fondamental d'un hamiltonien total code une solution au problème de calcul, dans lequel l'hamiltonien total comprend une somme de l'hamiltonien de problème et de l'hamiltonien de contrainte ;
la détermination, par le système informatique classique, d'un premier sous-ensemble (S₁) des hamiltoniens de contrainte de terme de somme de l'hamiltonien de contrainte et d'un second sous-ensemble (S₂) des hamiltoniens de contrainte de terme de somme de l'hamiltonien de contrainte ;
la réalisation de N cycles d'opérations, dans lequel N ≥ 2, dans lequel chaque cycle comprend :
• la préparation d'un état quantique initial ;
• l'évolution du système quantique selon une séquence d'opérateurs unitaires, la séquence comprenant des opérateurs unitaires de codage de problème, des opérateurs unitaires d'application de contrainte et des opérateurs pilotes unitaires,
• dans lequel chaque opérateur unitaire de codage de problème est un opérateur d'évolution temporelle unitaire d'un hamiltonien de problème de terme de somme de l'hamiltonien de problème ou est un opérateur d'évolution temporelle unitaire d'une somme d'hamiltoniens de problème de terme de somme de l'hamiltonien de problème,
• dans lequel chaque opérateur unitaire d'application de contrainte est un opérateur d'évolution temporelle unitaire d'un hamiltonien de contrainte de terme de somme tiré du premier sous-ensemble des hamiltoniens de contrainte de terme de somme de l'hamiltonien de contrainte, ou est un opérateur d'évolution temporelle unitaire d'une somme d'hamiltoniens de contrainte de terme de somme tirés dudit premier sous-ensemble, et
• dans lequel chaque opérateur pilote unitaire est un opérateur unitaire qui commute avec chaque hamiltonien de contrainte de terme de somme du second sous-ensemble des hamiltoniens de contrainte de terme de somme de l'hamiltonien de contrainte ; et
• la réalisation d'une mesure d'un ou de plusieurs constituants du système quantique ; et
la fourniture en sortie, par le système informatique classique, d'un résultat (590) du calcul quantique.

2. Procédé selon la revendication 1, dans lequel, pour chacun des N cycles d'opérations, l'évolution du système quantique selon la séquence d'opérateurs unitaires du cycle comprend la mise en œuvre d'au moins certains opérateurs unitaires de la séquence par un circuit quantique comprenant des portes quantiques.

3. Procédé selon la revendication 1 ou 2, dans lequel le système quantique comprend des sous-systèmes (450) comprenant chacun un sous-ensemble des constituants, dans lequel les sous-systèmes sont disjoints, dans lequel chaque sous-système a des constituants de frontière (420) faisant partie d'une frontière entre le sous-système et un ou plusieurs sous-systèmes adjacents, dans lequel chaque constituant de frontière participe à une interaction quantique représentée par un hamiltonien de contrainte de terme de somme du premier sous-ensemble des hamiltoniens de contrainte de terme de somme de l'hamiltonien de contrainte.

4. Procédé selon la revendication 3, dans lequel chaque opérateur pilote unitaire agit entièrement à l'intérieur de l'un des sous-systèmes du système quantique.

5. Procédé selon la revendication 3 ou 4, dans lequel chaque sous-système a un nombre total de constituants qui est indépendant d'une taille du problème de calcul.

6. Procédé selon l'une quelconque des revendications 3 à 5, dans lequel chaque opérateur pilote unitaire est réalisé par un circuit quantique de profondeur constante.

7. Procédé selon l'une quelconque des revendications précédentes, dans lequel l'état quantique initial d'au moins certains des N cycles est un état fondamental d'un hamiltonien de contrainte partielle qui est une somme de tous les hamiltoniens de contrainte de terme de somme tirés du second sous-ensemble des hamiltoniens de contrainte de terme de somme.

8. Procédé selon l'une quelconque des revendications précédentes, comprenant en outre :
la détermination d'un hamiltonien pilote qui est une somme d'hamiltoniens pilotes de terme de somme, dans lequel l'hamiltonien pilote commute avec chaque hamiltonien de contrainte de terme de somme du second sous-ensemble des hamiltoniens de contrainte de terme de somme, dans lequel chaque opérateur pilote unitaire est un opérateur d'évolution temporelle unitaire d'un hamiltonien pilote de terme de somme de l'hamiltonien pilote ou est un opérateur d'évolution temporelle unitaire d'une somme de deux ou plus de deux hamiltoniens pilotes de terme de somme de l'hamiltonien pilote.

9. Procédé selon l'une quelconque des revendications précédentes, dans lequel la séquence d'opérateurs unitaires d'au moins certains des N cycles d'opérations a la forme A₁ A₂ ... Aₚ, ou comprend au moins une sous-séquence de ladite forme, dans lequel p ≥ 3, dans lequel chaque Aᵢ est un produit de la forme Xᵢ Yᵢ Zᵢ, dans lequel l'un de Xᵢ, Yᵢ et Zᵢ est un opérateur unitaire de codage de problème, un autre de Xᵢ, Yᵢ et Zᵢ est un opérateur unitaire d'application de contrainte et encore un autre de Xᵢ, Yᵢ et Zᵢ est un opérateur pilote unitaire.

10. Procédé selon l'une quelconque des revendications précédentes, dans lequel les N cycles d'opérations comprennent un ou plusieurs cycles d'opérations adaptatifs, dans lequel, pour chaque cycle d'opérations adaptatif, les opérateurs unitaires de la séquence d'opérateurs unitaires du cycle adaptatif sont déterminés sur la base d'au moins un résultat de mesure d'une mesure réalisée dans un cycle précédent des N cycles d'opérations.

11. Procédé selon l'une quelconque des revendications précédentes, dans lequel les N cycles d'opérations comprennent un premier cycle d'opérations, dans lequel l'évolution du système quantique selon la séquence d'opérateurs unitaires du premier cycle d'opérations conduit à un premier état quantique du système quantique, dans lequel la réalisation de la mesure dans le premier cycle comprend :
la mesure d'une énergie du premier état quantique.

12. Procédé selon la revendication 11, dans lequel les N cycles d'opérations comprennent un deuxième cycle d'opérations réalisé après le premier cycle d'opérations, dans lequel l'évolution du système quantique selon la séquence d'opérateurs unitaires du deuxième cycle d'opérations conduit à un second état quantique du système quantique, dans lequel la réalisation de la mesure dans le deuxième cycle comprend :
la mesure d'une énergie du second état quantique ;
dans lequel le procédé comprend :
la comparaison de l'énergie du premier état quantique avec l'énergie du second état quantique ; et
la détermination de la séquence d'opérateurs unitaires à appliquer dans un troisième cycle des N cycles d'opérations, dans lequel le troisième cycle doit être réalisé après le deuxième cycle, dans lequel la séquence d'opérateurs unitaires à appliquer dans le troisième cycle est déterminée sur la base d'au moins la comparaison de l'énergie du premier état quantique avec l'énergie du second état quantique.

13. Procédé selon l'une quelconque des revendications précédentes, dans lequel :
l'hamiltonien de problème a la forme ${\hat{H}}_{P} = {\sum }_{k} {J}_{k} {\hat{σ}}_{z}^{\left(k\right)}$, dans lequel ${\hat{σ}}_{z}^{\left(k\right)}$ est un opérateur de Pauli d'un k-ième constituant du système quantique, dans lequel chaque Jₖ est un coefficient, et dans lequel chaque terme ${J}_{k} {\hat{σ}}_{z}^{\left(k\right)}$ est un hamiltonien de problème de terme de somme ; et/ou
l'hamiltonien de contrainte a la forme *Ĥ_{C} = ΣₗĈₗ,* dans lequel chaque *Ĉₗ* a la forme *Ĉₗ = aₗZₗ + bₗI,* dans lequel *Zₗ* est un produit tensoriel d'opérateurs σ_{z} de Pauli, I est A l'opérateur d'identité, et ai et bi sont des coefficients, et dans lequel chaque *Ĉₗ* est un hamiltonien de contrainte de terme de somme.

14. Procédé selon l'une quelconque des revendications précédentes, dans lequel chaque opérateur pilote unitaire a la forme exp(itĤ), dans lequel t est un coefficient et Ĥ est un opérateur de la forme Σ*ⱼbⱼX̂ⱼ,* dans lequel chaque bⱼ est un coefficient et chaque X̂ⱼ est un produit tensoriel d'opérateurs σₓ de Pauli ou un unique opérateur σₓ de Pauli, dans lequel la notation Σⱼ désigne une somme de deux ou plus de deux termes ou un terme unique.

15. Appareil (500) de réalisation d'un calcul quantique, comprenant :
un système quantique (300) comprenant des constituants (302) ;
un système informatique classique (550) configuré pour :
• coder un problème de calcul (110) en un hamiltonien de problème (150) du système quantique, dans lequel l'hamiltonien de problème est un hamiltonien à un corps qui est une somme d'hamiltoniens de problème de terme de somme (152) ;
• déterminer un hamiltonien de contrainte (250) du système quantique, l'hamiltonien de contrainte étant une somme d'hamiltoniens de contrainte de terme de somme (252), dans lequel un état fondamental d'un hamiltonien total code une solution au problème de calcul, dans lequel l'hamiltonien total comprend une somme de l'hamiltonien de problème et de l'hamiltonien de contrainte ; et
• déterminer un premier sous-ensemble (S₁) des hamiltoniens de contrainte de terme de somme de l'hamiltonien de contrainte et d'un second sous-ensemble (S₂) des hamiltoniens de contrainte de terme de somme de l'hamiltonien de contrainte ;
un système de traitement quantique comprenant un dispositif d'évolution unitaire (530) et un dispositif de mesure (540), le système de traitement quantique étant configuré pour réaliser N cycles d'opérations, dans lequel N ≥ 2, dans lequel chaque cycle comprend :
• l'évolution, par le dispositif d'évolution unitaire, du système quantique selon une séquence d'opérateurs unitaires, la séquence comprenant des opérateurs unitaires de codage de problème, des opérateurs unitaires d'application de contrainte et des opérateurs pilotes unitaires,
• dans lequel chaque opérateur unitaire de codage de problème est un opérateur d'évolution temporelle unitaire d'un hamiltonien de problème de terme de somme de l'hamiltonien de problème ou est un opérateur d'évolution temporelle unitaire d'une somme d'hamiltoniens de problème de terme de somme de l'hamiltonien de problème,
• dans lequel chaque opérateur unitaire d'application de contrainte est un opérateur d'évolution temporelle unitaire d'un hamiltonien de contrainte de terme de somme tiré du premier sous-ensemble des hamiltoniens de contrainte de terme de somme de l'hamiltonien de contrainte, ou est un opérateur d'évolution temporelle unitaire d'une somme d'hamiltoniens de contrainte de terme de somme tirés dudit premier sous-ensemble, et
• dans lequel chaque opérateur pilote unitaire est un opérateur unitaire qui commute avec chaque hamiltonien de contrainte de terme de somme du second sous-ensemble des hamiltoniens de contrainte de terme de somme de l'hamiltonien de contrainte ; et
• la réalisation, par le dispositif de mesure, d'une mesure d'un ou de plusieurs constituants du système quantique,
le système informatique classique étant en outre configuré pour fournir en sortie un résultat (590) du calcul quantique.
